# EUROPEAN PATENT APPLICATION

(11) **EP 4 561 094 A1**
(43) Date of publication of application: **28.05.2025**
(21) Application number: 23842743.9
(22) Date of filing: 22.06.2023
(51) Int. Cl.: H04N 25/70, H01L 27/146

(54) **SOLID-STATE IMAGING DEVICE**

(30) Priority: 19.07.2022 JP 2022115102
(71) Applicant: Sony Semiconductor Solutions Corporation, Atsugi-shi, Kanagawa 243-0014 (JP)
(72) Inventor: HONDA Motonari, Atsugi-shi, Kanagawa 243-0014 (JP)
(74) Representative: MFG Patentanwälte Meyer-Wildhagen Meggle-Freund Gerhard PartG mbB
(86) International application number: PCT/JP2023/023073
(87) International publication number: WO 2024/018812

(57) **Abstract**

Luminance information and luminance change information are obtained at the same timing with high resolution.

A solid-state imaging device includes a plurality of pixels and a control circuit. Each of the plurality of pixels includes a photoelectric conversion element that performs photoelectric conversion on incident light to generate an electrical signal, a first pixel circuit that converts the electrical signal into first information, and a second pixel circuit that converts the electrical signal into second information. The control circuit controls each of the plurality of pixels such that the photoelectric conversion element is connected to either the first pixel circuit or the second pixel circuit.

## Description

### TECHNICAL FIELD

The present disclosure relates to a solid-state imaging device.

### BACKGROUND ART

Image sensor are generally intended to obtain luminance information. Nowadays, sensors that obtain not luminance information but luminance change information depending on a purpose are widely studied. Image sensors for obtaining both of these types of information are being studied. In these image sensors, for example, both types of information are obtained by switching between driving for obtaining luminance information and driving for obtaining luminance change information, or by separately arranging a pixel region for obtaining luminance information and a pixel region for obtaining luminance change information.

In the switching system, however, there is a problem that the luminance information and the luminance change information cannot be simultaneously obtained, and in the region division system, there is a problem that resolution of the luminance information and the luminance change information is constantly low. If the luminance information and the luminance change information cannot be obtained at the same time, for example, a time lag occurs between the luminance information and the luminance change information in a case where an image of a subject moving at high speed is captured, and it is difficult to generate a high-quality image from the obtained information or to achieve accurate object recognition or the like. Furthermore, in a case where the resolution decreases, image quality and a recognition rate can similarly decrease.

### CITATION LIST

### PATENT DOCUMENT

Patent Document 1: WO 2019/146527 A
Patent Document 2: Japanese Patent Application Laid-Open No. 2021-129265

### SUMMARY OF THE INVENTION

### PROBLEMS TO BE SOLVED BY THE INVENTION

The present disclosure therefore provides a solid-state imaging device that obtains luminance information and luminance change information at the same timing and with high resolution.

### SOLUTIONS TO PROBLEMS

According to an embodiment, a solid-state imaging device includes a plurality of pixels and a control circuit. Each of the plurality of pixels includes a photoelectric conversion element that performs photoelectric conversion on incident light to generate an electrical signal, a first pixel circuit that converts the electrical signal into first information, and a second pixel circuit that converts the electrical signal into second information. The control circuit controls each of the plurality of pixels such that the photoelectric conversion element is connected to either the first pixel circuit or the second pixel circuit.

The control circuit may control, on the basis of arrangement of each of the pixels, whether the first pixel circuit or the second pixel circuit is to convert the electrical signal.

The control circuit may control, for each of the plurality of pixels, switching between timing of output using the first pixel circuit and timing of output using the second pixel circuit.

A pixel array in which the plurality of pixels is arranged may be included. The plurality of pixels may be arranged in a two-dimensional array along a line and a column extending in a direction intersecting a direction of the line in the pixel array.

The control circuit may perform, for each of regions in the pixel array, control for switching between the pixels that perform the output using the first pixel circuits and the pixels that perform the output using the second pixel circuits.

The photoelectric conversion element may be an element that obtains luminance information. The first pixel circuit may convert the electrical signal into gradation information, and the second pixel circuit may convert the electrical signal into event detection information.

The photoelectric conversion element may be a single photon avalanche diode (SPAD). The first pixel circuit may convert the electrical signal into photon counting information, and the second pixel circuit may convert the electrical signal into information for obtaining time of flight (ToF) information.

The control circuit may switch, on the basis of time, between the first pixel circuits and the second pixel circuits.

The control circuit may switch between the first pixel circuits and the second pixel circuits at periodic timing.

The control circuit may perform control for spatially periodically arranging the pixels that use the first pixel circuits and the pixels that use the second pixel circuits in the pixel array.

The control circuit may perform control for outputting signals of a same type, namely the first signals or the second signals, from the pixels belonging to a same line.

The control circuit may perform control for outputting signals of a different type, namely the first signals or the second signals, from the pixels belonging to an adjacent line.

The control circuit may control lines adjacent to the line that outputs the first signals such that one of the lines is a line that outputs the first signals and the other line is a line that outputs the second signals, and may control the line that outputs the second signals such that both adjacent lines are lines that output the first signals.

The control circuit may divide the pixel array into regions of 2 × 2 pixels, and perform control for arranging at least one pixel that outputs the first signal and pixels that output the second signals other than the at least one pixel that outputs the first signal for the pixels included in a range of every 2 × 2 pixels.

The control circuit may perform control such that the pixels that output the second signals periodically move in a four-phase period.

The control circuit may divide the pixel array into regions of 3 × 3 pixels, and perform control for arranging at least one pixel that outputs the first signal and pixels that output the second signals other than the at least one pixel that outputs the first signal for the pixels included in a range of every 3 × 3 pixels.

The control circuit may perform control such that the pixels that output the second signals periodically move in a nine-phase period.

The control circuit may obtain event information based on the second signals in the pixel array, and the control circuit may determine, on the basis of the event information, timing of selecting whether each of the plurality of pixels is to be connected to the first pixel circuit or the second pixel circuit.

The control circuit may obtain the event information in a region in the pixel array, and the control unit may select, on the basis of the event information belonging to the region, whether the pixels belonging to the region are to be connected to the first pixel circuits or the second pixel circuits.

The control circuit may obtain an optical flow of a moving object present in the pixel array, the control circuit may set a region in the pixel array on the basis of the optical flow, and the control circuit may select whether the pixels belonging to the region are to be connected to the first pixel circuits or the second pixel circuits.

The control circuit may obtain luminance information based on the first signals in the pixel array, and the control circuit may determine, on the basis of the luminance information, timing of selecting whether each of the plurality of pixels is to be connected to the first pixel circuit or the second pixel circuit.

The control circuit may set a region in the pixel array on the basis of intensity of the luminance information, and the control circuit may select whether the pixels belonging to the region are to be connected to the first pixel circuits or the second pixel circuits.

The control circuit may set a region in the pixel array on the basis of a result of object recognition using the luminance information, and the control circuit may select whether the pixels belonging to the region are to be connected to the first pixel circuits or the second pixel circuits.

### BRIEF DESCRIPTION OF DRAWINGS

Fig. 1 is a block diagram illustrating an outline of a solid-state imaging device according to an embodiment.
Fig. 2 is a block diagram illustrating an outline of a solid-state imaging element according to the embodiment.
Fig. 3 is a diagram illustrating an outline of a pixel according to the embodiment.
Fig. 4 is a diagram illustrating an example of output arrangement of first signals and second signals according to the embodiment.
Fig. 5 is a diagram illustrating another example of the output arrangement of the first signals and the second signals according to the embodiment.
Fig. 6 is a diagram illustrating another example of the output arrangement of the first signals and the second signals according to the embodiment.
Fig. 7 is a diagram illustrating another example of the output arrangement of the first signals and the second signals according to the embodiment.
Fig. 8 is a diagram illustrating another example of the output arrangement of the first signals and the second signals according to the embodiment.
Fig. 9 is a diagram illustrating an example of a duty ratio of a control signal according to the embodiment.
Fig. 10 is a diagram illustrating another example of the output arrangement of the first signals and the second signals according to the embodiment.
Fig. 11 is a diagram illustrating another example of the output arrangement of the first signals and the second signals according to the embodiment.
Fig. 12 is a diagram illustrating another example of the output arrangement of the first signals and the second signals according to the embodiment.
Fig. 13 is a diagram illustrating another example of the duty ratio of the control signal according to the embodiment.
Fig. 14 is a diagram illustrating another example of the output arrangement of the first signals and the second signals according to the embodiment.
Fig. 15 is a diagram illustrating another example of the output arrangement of the first signals and the second signals according to the embodiment.
Fig. 16 is a diagram illustrating another example of the output arrangement of the first signals and the second signals according to the embodiment.
Fig. 17 is a diagram illustrating another example of the output arrangement of the first signals and the second signals according to the embodiment.
Fig. 18 is a diagram illustrating another example of the output arrangement of the first signals and the second signals according to the embodiment.
Fig. 19 is a diagram illustrating another example of the output arrangement of the first signals and the second signals according to the embodiment.
Fig. 20 is a diagram illustrating another example of the output arrangement of the first signals and the second signals according to the embodiment.
Fig. 21 is a diagram illustrating another example of the output arrangement of the first signals and the second signals according to the embodiment.
Fig. 22 is a diagram illustrating another example of the output arrangement of the first signals and the second signals according to the embodiment.
Fig. 23 is a diagram illustrating another example of the output arrangement of the first signals and the second signals according to the embodiment.
Fig. 24 is a diagram illustrating another example of the output arrangement of the first signals and the second signals according to the embodiment.
Fig. 25 is a diagram illustrating another example of the output arrangement of the first signals and the second signals according to the embodiment.
Fig. 26 is a diagram illustrating another example of the output arrangement of the first signals and the second signals according to the embodiment.
Fig. 27 is a diagram illustrating another example of the output arrangement of the first signals and the second signals according to the embodiment.
Fig. 28 is a diagram illustrating another example of the output arrangement of the first signals and the second signals according to the embodiment.
Fig. 29 is a diagram illustrating another example of the output arrangement of the first signals and the second signals according to the embodiment.
Fig. 30 is a diagram illustrating another example of the output arrangement of the first signals and the second signals according to the embodiment.
Fig. 31 is a diagram illustrating another example of the output arrangement of the first signals and the second signals according to the embodiment.
Fig. 32 is a diagram illustrating another example of the output arrangement of the first signals and the second signals according to the embodiment.
Fig. 33 is a diagram illustrating another example of the output arrangement of the first signals and the second signals according to the embodiment.
Fig. 34 is a diagram illustrating another example of the output arrangement of the first signals and the second signals according to the embodiment.
Fig. 35 is a diagram illustrating another example of the output arrangement of the first signals and the second signals according to the embodiment.
Fig. 36 is a diagram illustrating another example of the output arrangement of the first signals and the second signals according to the embodiment.
Fig. 37 is a diagram illustrating another example of the output arrangement of the first signals and the second signals according to the embodiment.
Fig. 38 is a block diagram illustrating an example of a schematic configuration of a vehicle control system.
Fig. 39 is an explanatory diagram illustrating an example of installation positions of an outside-vehicle information detecting unit and an imaging section.

### MODE FOR CARRYING OUT THE INVENTION

Embodiments of the present disclosure will be described hereinafter with reference to the drawings. The drawings are used for explanation, and a shape and size of each of components in actual devices, ratios of size to other components, and the like are not necessarily as illustrated in the drawings. Furthermore, the drawings are illustrated in a simplified manner, and components necessary for implementation are also appropriately provided in addition to those illustrated in the drawings.

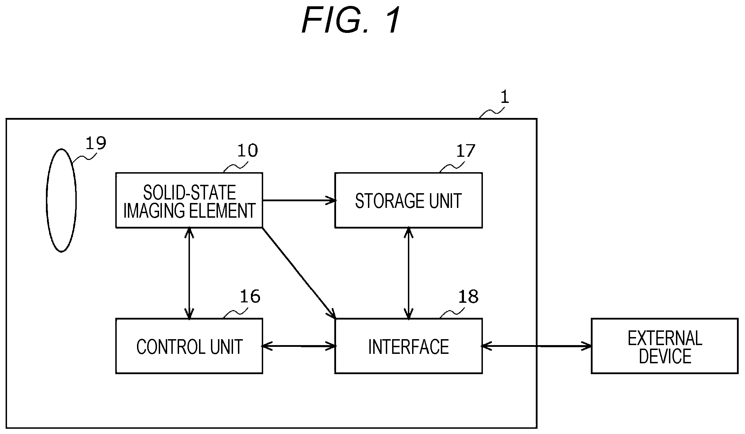

Fig. 1 is a block diagram illustrating an outline of a solid-state imaging device according to an embodiment. A solid-state imaging device 1 includes a solid-state imaging element 10, a control unit 16, a storage unit 17, an interface 18, and an optical system 19. The solid-state imaging device 1 includes pixels capable of obtaining a plurality of pieces of information, outputs the plurality of pieces of information from a plurality of pixels at the same timing on the basis of various conditions, appropriately performs signal processing and the like, and outputs the plurality of pieces of information.

The solid-state imaging element 10 is an element that outputs signals from the pixels on the basis of light obtained from the outside via the optical system 19. The signals output from the solid-state imaging element 10 are output to the storage unit 17 or the interface 18.

The control unit 16 is a circuit that controls the solid-state imaging device 1. The control unit 16 controls the solid-state imaging element 10, for example, on the basis of a command obtained from the outside via the interface 18 or on the basis of a signal obtained from the solid-state imaging element 10. This control may be, for example, control for selecting a type of signals to be output from the pixels.

The storage unit 17 includes a memory, a storage, or the like that temporarily or non-temporarily stores signals obtained in the solid-state imaging device 1. Information stored in the storage unit 17 may be appropriately output to the outside via the interface 18. Furthermore, a command, information, or the like from the outside may be temporarily or non-temporarily stored. In a case where information processing by software is specifically achieved using hardware resources as at least a part of processing in the solid-state imaging element 10 or the control unit 16, a program, an execution file, or the like for the information processing may be stored in the storage unit 17.

The interface 18 is an interface for connecting the inside of the solid-state imaging device 1 and an external device outside. The interface 18 may further include a display for displaying images and presenting data to a user, a button for receiving a command from the user, a touch panel, or a user interface for exchanging information with other users.

The optical system 19 is an optical system for the solid-state imaging element 10 to appropriately obtain information regarding light such as light reflected from an imaging target or light transmitted through the imaging target. The optical system 19 may include, for example, one or a plurality of lenses, a diaphragm, a shutter, or the like.

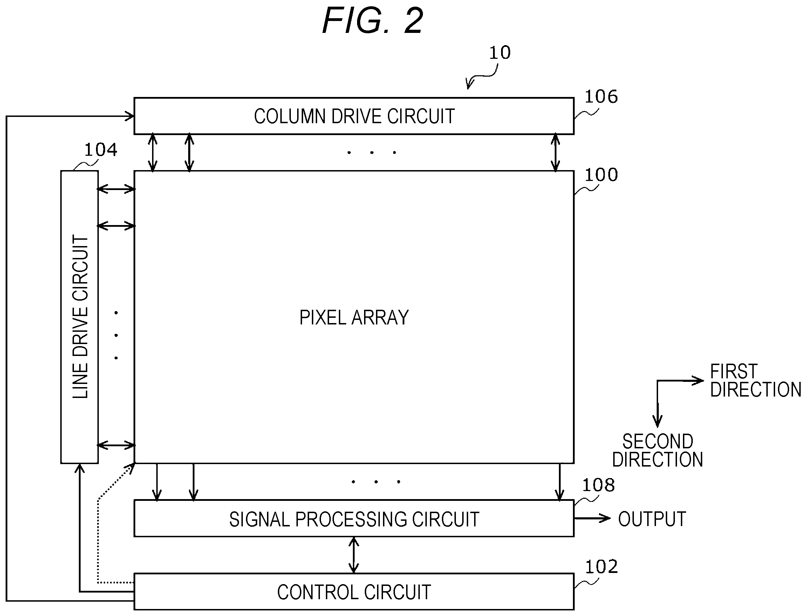

Fig. 2 is a block diagram illustrating an outline of the solid-state imaging element 10 according to the embodiment. The solid-state imaging element 10 includes a pixel array 100, a control circuit 102, a line drive circuit 104, a column drive circuit 106, and a signal processing circuit 108. The solid-state imaging element 10 is, for example, an image sensor that appropriately processes and outputs signals output from the pixels.

The pixel array 100 is a region in which the pixels are provided in an array. In the pixel array 100, for example, the plurality of pixels is arranged in a two-dimensional array along a first direction and a second direction intersecting the first direction. Here, the first direction may be a line direction, and the second direction may be a column direction.

The control circuit 102 is, for example, a circuit that receives signals from the control unit 16 and that controls each component of the solid-state imaging element 10 so that the pixel array 100 outputs appropriate information. In the following description, each component might perform various processes, which may be controlled by the control circuit 102.

The line drive circuit 104 is a circuit that selects and outputs a line in the pixel array 100. Furthermore, in a case where the pixels operate as event detection pixels that perform event detection, the line drive circuit 104 may also operate as an arbiter.

The column drive circuit 106 is a circuit that selects a column among pixels belonging to a line selected by the line drive circuit 104 and that drives a pixel belonging to the selected column to make an output from the pixel. Similarly to the line drive circuit 104, the column drive circuit 106 may be a circuit that also operates as an arbiter.

Furthermore, the column drive circuit 106 may transmit a signal for switching an output of a pixel to each pixel. In a case where pixels belonging to a certain region of the pixel array 100 output second signals and pixels belonging to another region output first signals, for example, the pixels belonging to the certain region may be driven by a signal from the column drive circuit 106 to output the second signals. The switching of driving, however, may be performed not by the column drive circuit 106 but by the line drive circuit 104, or as indicated by a dotted line, the control circuit 102 may perform the switching of driving by directly specifying a region.

The signal processing circuit 108 is a circuit that performs signal processing on a signal output from each pixel of the pixel array 100 and that outputs the signal. The signal processing circuit 108 may include, for example, an ADC that converts an analog signal output from the pixel array 100 into a digital signal. In addition, the signal processing circuit 108 may perform signal processing on the digital signal to generate an image signal, or may use, for the obtained signal, an algorithm of object detection, object recognition, or the like using a model trained through machine learning. The signal processing circuit 108 outputs the processed signal to the outside of the solid-state imaging element 10.

The signal processing circuit 108 can perform various types of signal processing under the control of the control circuit 102. The control circuit 102 can also transmit various control signals to the individual components on the basis of the signal output from the signal processing circuit 108.

Note that, although not illustrated, a transitory or nontransitory storage area may be provided inside the solid-state imaging element 10. The use of the storage area may be similar to that of the storage unit 17 described above, or may operate as one of various buffers or the like for temporarily storing signals subjected to signal processing by the signal processing circuit 108.

Next, a pixel circuit will be described. As described above, the pixel array 100 includes, for example, pixels arranged in a two-dimensional array in the line direction and the column direction.

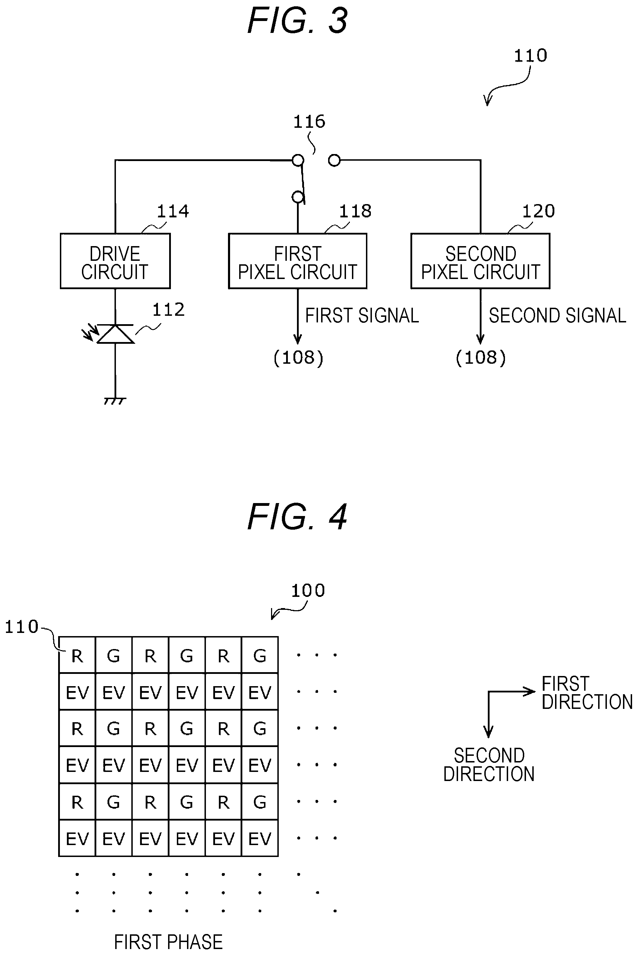

Fig. 3 is a diagram illustrating an example of a pixel according to the embodiment. A pixel 110 includes a photoelectric conversion element 112, a drive circuit 114, a switch 116, a first pixel circuit 118, and a second pixel circuit 120. In the pixel array 100, a plurality of pixels 110 illustrated in Fig. 3 is arranged in an array.

The photoelectric conversion element 112 performs photoelectric conversion on incident light to generate an electrical signal. The photoelectric conversion element 112 is a light receiving element determined on the basis of obtained information.

In a case where the solid-state imaging device 1 obtains information such as luminance information, the photoelectric conversion element 112 may be an element such as a laser diode. In a case where the solid-state imaging device 1 obtains information based on photons, the photoelectric conversion element 112 may be an element such as a single photon avalanche diode (SPAD). As described above, the photoelectric conversion element 112 is appropriately determined in accordance with a purpose of the solid-state imaging device 1.

The drive circuit 114 is a circuit that drives the photoelectric conversion element 112. In a case where an appropriate signal is input to the drive circuit 114, the photoelectric conversion element 112 converts a signal based on received light into an analog signal and outputs the analog signal.

The switch 116 is a switch that switches a pixel circuit in which the signal output from the photoelectric conversion element 112 is to be processed before being output from the pixel.

The first pixel circuit 118 is a circuit that converts the analog signal output from the photoelectric conversion element 112 into a first signal and that outputs the first signal. The first pixel circuit 118 may output the first signal obtained as a result of the conversion to the signal processing circuit 108.

The second pixel circuit 120 is a circuit that converts the analog signal output from the photoelectric conversion element 112 into a second signal and that outputs the second signal. The second pixel circuit 120 may output the second signal obtained as a result of the conversion to the signal processing circuit 108.

Note that each of the pixels 110 need not include all the components, and some components may be shared with other pixels 110. In a case where there is a floating region in the drive circuit 114, for example, the floating region, the switch 116, the first pixel circuit 118, and the second pixel circuit 120 may be shared. The same applies to other components, and similarly to components shared in a general imaging element, at least a subset of components may be shared between a plurality of pixels insofar as signal processing in the present disclosure is possible.

The driving of the photoelectric conversion element 112 by the drive circuit 114 of the pixel 110 and the switching by the switch 116 may be controlled by the control circuit 102. In the pixel array 100, the same control may be performed for any number of pixels 110, that is, for example, for pixels 110 in any region. Furthermore, the control circuit 102 may control, in each pixel, whether to output the first signal via the first pixel circuit 118 or the second signal via the second pixel circuit 120. This control signal may be transmitted, for example, to the pixel 110 via the column drive circuit 106, or may be transmitted to the pixel 110 via another path.

In other words, the control circuit 102 can control whether to output the first signal or the second signal for each pixel 110 belonging to the pixel array 100.

The control circuit 102 can also switch between outputting the first signal via the first pixel circuit and outputting the second signal via the second pixel circuit on the basis of the arrangement of each pixel 110 in the pixel array 100. That is, the control circuit 102 can spatially specify and switch which signal is to be output from which pixel 110 in the pixel array 100.

Furthermore, the control circuit 102 can also control a timing of outputting the first signal using the first pixel circuit and a timing of outputting the second signal using the second pixel circuit for any pixel 110 belonging to the pixel array 100. That is, the control circuit 102 can temporally switch which signal is to be output for the pixels 110 in the pixel array 100.

In order to perform such control, the control circuit 102 may output control signals to components that need to be controlled in the pixels 110. As an example, the control circuit 102 can output a drive control signal for the drive circuit 114, a switching control signal for the switch 116, a drive control signal for the first pixel circuit 118, and a drive control signal for the second pixel circuit 120 to the components in each pixel 110 via appropriate paths.

As a non-limiting example, the photoelectric conversion element 112 may be an element that obtains a luminance signal. In this case, the first pixel circuit 118 and the second pixel circuit 120 may convert a signal related to luminance and output the signal. For example, the first pixel circuit 118 may convert luminance information that is an analog electrical signal obtained by the photoelectric conversion element 112 into a gradation signal and output the gradation signal as the first signal, and the second pixel circuit 120 may read a change in the luminance information obtained by the photoelectric conversion element 112, convert the change into event detection information, and output the event detection information as the second signal.

As another non-limiting example, the photoelectric conversion element 112 may be an element capable of receiving light in units of photons. In this case, the first pixel circuit 118 and the second pixel circuit 120 may convert a signal related to information obtained by sensing photons and output the converted signal. For example, the first pixel circuit 118 may convert an electrical signal obtained by the photoelectric conversion element 112 into photon counting information, and the second pixel circuit 120 may convert the electrical signal obtained by the photoelectric conversion element 112 into information for obtaining time of flight (ToF) information and output the information. In this case, a negative voltage applied to the photoelectric conversion element may be controlled together with the switching between the first pixel circuit 118 and the second pixel circuit 120.

In addition, in a case where different types of signal according to a purpose can be obtained from a signal that can be obtained, the photoelectric conversion element 112 can use any elements that obtain such signals. Furthermore, in accordance with the selection by the element, a plurality of pixel circuits can be arranged as any pixel circuits capable of obtaining different types of signal.

As some embodiments, the photoelectric conversion element 112, a combination of the first pixel circuit 118 and the second pixel circuit 120, and a spatial and temporal control method will be described with reference to examples. Furthermore, the pixels 110 in each embodiment will be described using a pixel for obtaining luminance and a pixel for detecting an event, but the present invention is not limited to this, and any pixels may be switched as long as the first signal and the second signal are appropriately obtained.

### (First Embodiment)

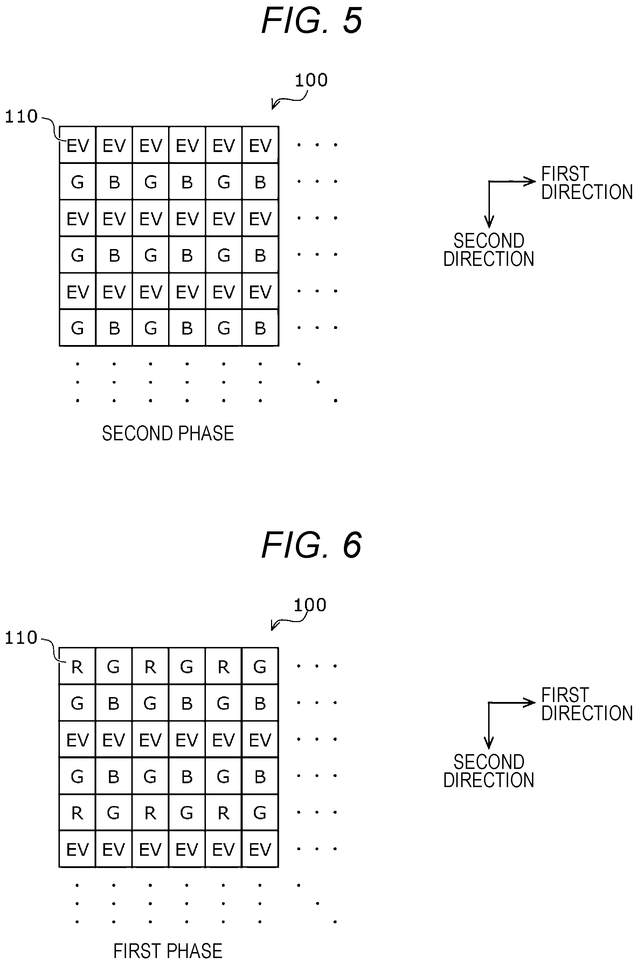

Figs. 4 and 5 are diagrams illustrating an example of transition of output arrangement of the first signals and the second signals in the pixel array 100 according to an embodiment. These drawings illustrate some of the pixels 110 of the pixel array 100. Note that, in the following drawings, a first direction and a second direction are illustrated as non-limiting examples, and the disclosure according to the embodiments does not exclude directions other than these directions.

In the pixels 110, R indicates a pixel for obtaining red luminance information, G indicates a pixel for obtaining green luminance information, and B indicates a pixel for obtaining blue luminance information. These pixels 110 are connected to the first pixel circuits 118, and each outputs a luminance signal based on intensity of incident light as the first signal.

EV, on the other hand, indicates a pixel that outputs event detection information. Such pixels 110 are connected to the second pixel circuits 120, and each outputs an event detection signal for obtaining a change in intensity of incident light as the second signal.

Note that arrangement of the pixels for obtaining the luminance information may be a Bayer array as illustrated in the drawing, or may include pixels that receive light of another color or wavelength, such as white (W) or cyan (Cy). As another example, pixels that receive infrared (IR) light, pixels including a plasmon filter, or the like may be provided. Furthermore, pixels for another purpose, such as pixels in a different polarization state or pixels for obtaining an image plane phase difference, may be provided.

As illustrated in Fig. 4 as a first phase, for example, the control circuit 102 performs control for outputting the first signals from odd-numbered lines and performs control for outputting the second signals from even-numbered lines.

As illustrated in Fig. 5 as a second phase, for example, the control circuit 102 performs control for outputting the second signals from the odd-numbered lines and performs control for outputting the first signals from the even-numbered lines.

As described above, the control circuit 102 may perform control such that the pixels 110 that output the first signals and the second signals, that is, the pixels that output the signals via the first pixel circuit 118 and the pixels that output the signals via the second pixel circuit 120, are spatially periodically arranged.

Furthermore, the control circuit 102 may perform control for temporally periodically switching, that is, control for switching at periodic timing, the arrangement in the first phase illustrated in Fig. 4 and the arrangement in the second phase illustrated in Fig. 5. As described above, the control circuit 102 can obtain, in a state in which resolution is not reduced, information based on the first signals and information based on the second signals by spatially and temporally switching information regarding light received by the photoelectric conversion element.

Note that, as another example, the control circuit 102 may provide, for example, a timing at which all the pixels included in the pixel array 100 output the first signals between the first phase and the second phase. This holds similarly to each of the following modes.

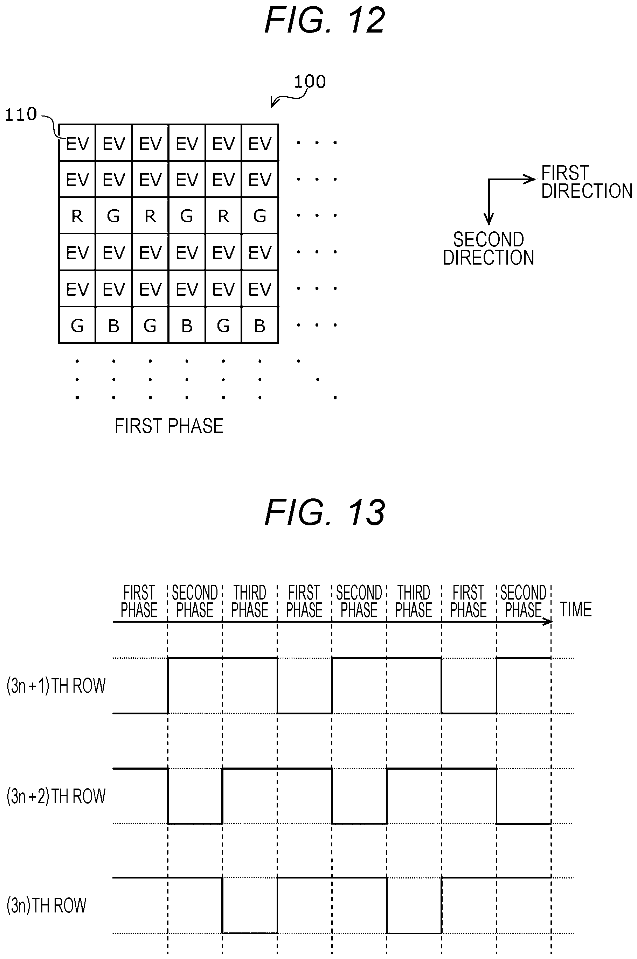

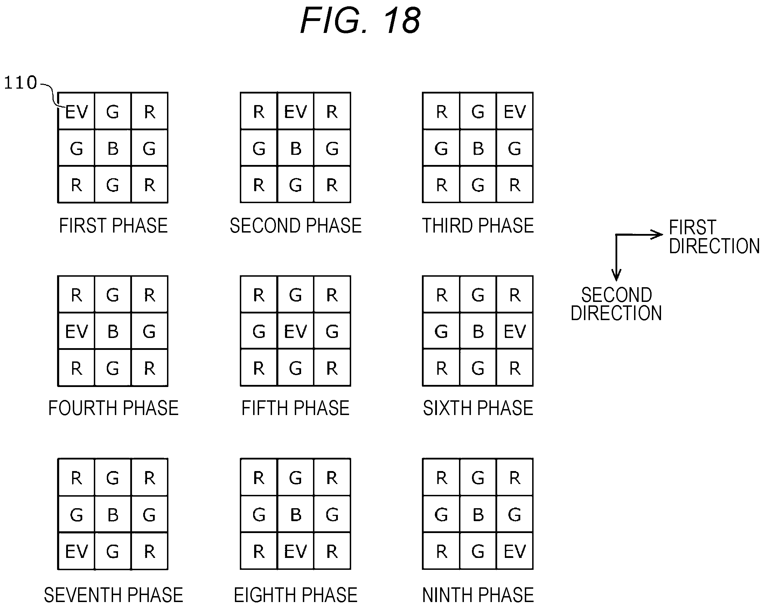

Although a two-phase transition is made in Figs. 4 and 5, the transition may be made in more phases instead of two. Although a three-phase transition will be described in Figs. 6 to 13, a four-phase transition will be described in Figs. 13 to 17, and a nine-phase transition will be described in Fig. 18, a type of transition is not limited to these, and a transition in any number of phases may be achieved insofar as high-resolution information can be appropriately obtained.

Figs. 6, 7, and 8 are diagrams illustrating an example of a three-phase transition.

As illustrated in Fig. 6 as a first phase, for example, the control circuit 102 performs control for outputting the first signals from (3n + 1)th lines and (3n + 2)th lines, and performs control for outputting the second signals from (3n)th lines.

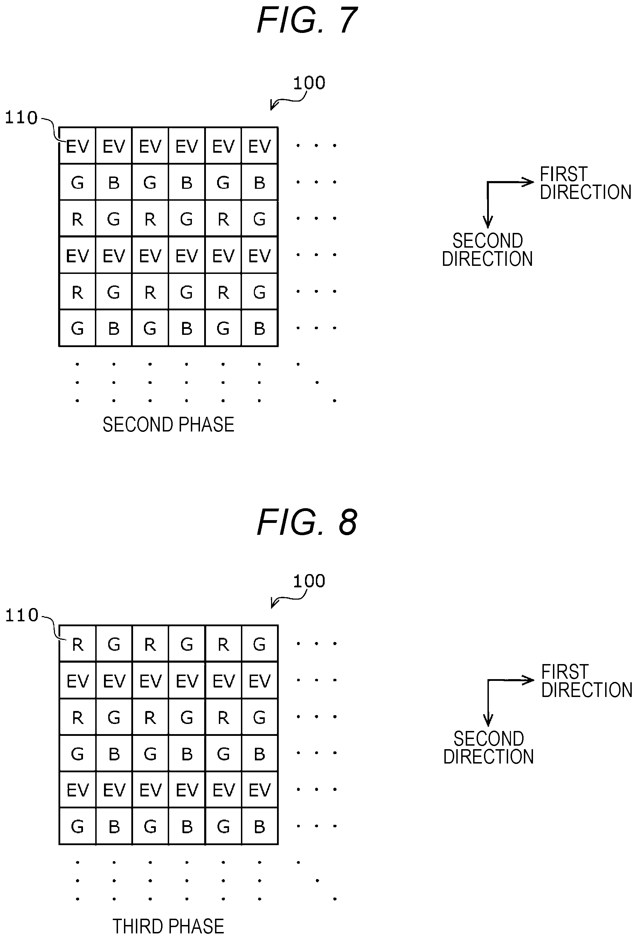

As illustrated in Fig. 7 as a second phase, for example, the control circuit 102 performs control for outputting the first signals from the (3n + 2)th lines and the (3n)th lines, and performs control for outputting the second signals from the (3n + 1)th lines.

As illustrated in Fig. 8 as a third phase, for example, the control circuit 102 performs control for outputting the first signals from the (3n + 1)th lines and the (3n)th lines, and performs control for outputting the second signals from the (3n + 2)th lines.

The control circuit 102 may thus perform control for periodically arranging the pixels 100 that output the first signals and the second signals in a set of three lines. Alternatively, the control circuit 102 may perform control for temporally periodically switching the first to the third phases.

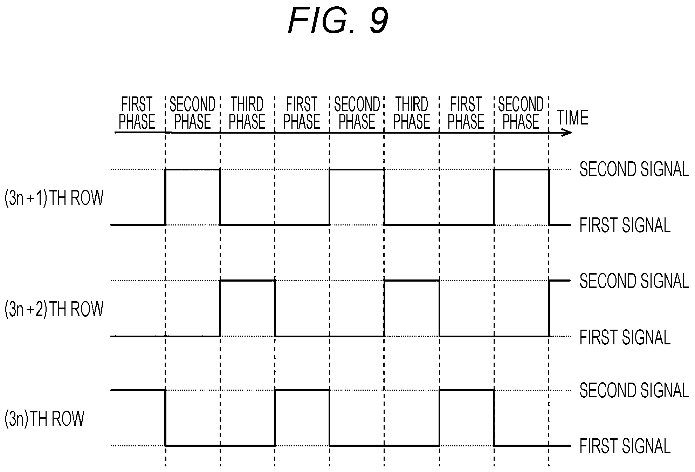

Fig. 9 is a diagram illustrating an example of a control signal output from the control circuit 102 to each line. By receiving such a control signal, in the first phase, the (3n)th lines output the second signals, and the other lines output the first signals. In the second phase, the (3n + 1)th lines output the second signals, and the other lines output the first signals. In the third phase, the (3n + 2)th lines output the second signals, and the other lines output the first signals.

Temporal density of the pixels 110 that output the second signals can thus be set on the basis of a duty ratio. In particular, in a case where the number of phases is increased to three or more, the control circuit 102 can set a temporal density at which the pixels 110 output the second signals by controlling the duty ratio. For example, as described below, the temporal density of outputting the second signals can be increased.

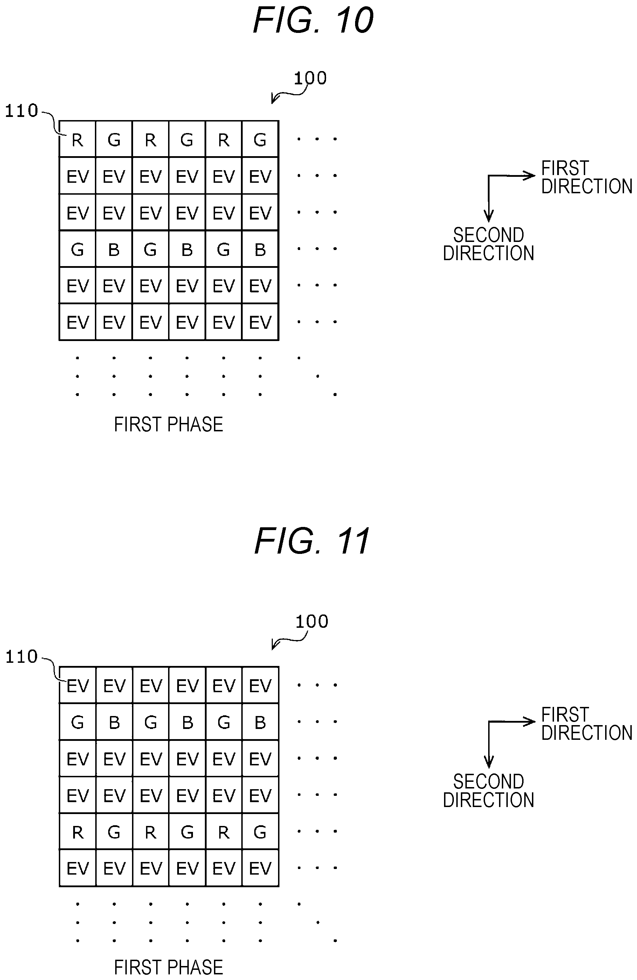

Figs. 10, 11, and 12 are diagrams illustrating another example of the three-phase transition.

As illustrated in Fig. 10 as a first phase, for example, the control circuit 102 performs control for outputting the first signals from the (3n + 1)th lines, and performs control for outputting the second signals from the (3n + 2)th lines and the (3n)th lines.

As illustrated in Fig. 11 as a second phase, for example, the control circuit 102 performs control for outputting the first signals from the (3n + 2)th lines, and performs control for outputting the second signals from the (3n + 1)th lines and the (3n)th lines.

As illustrated in Fig. 12 as a third phase, for example, the control circuit 102 performs control for outputting the first signals from the (3n)th lines, and performs control for outputting the second signals from the (3n + 1)th lines and the (3n + 2)th lines.

As illustrated in these drawings, the control circuit 102 may perform control for arranging more pixels 110 that output the second signals than ones that output the first signals.

Fig. 13 is a diagram illustrating an example of a control signal output from the control device 102 to each line in the case of Figs. 10 to 12. By receiving such control signals, the control of Figs. 10 to 12 can be performed.

As compared with Fig. 9, the control circuit 102 can express the number of pixels that output the first signals or the second signals by different duty ratios to determine which of the signals more pixels 110 are to output.

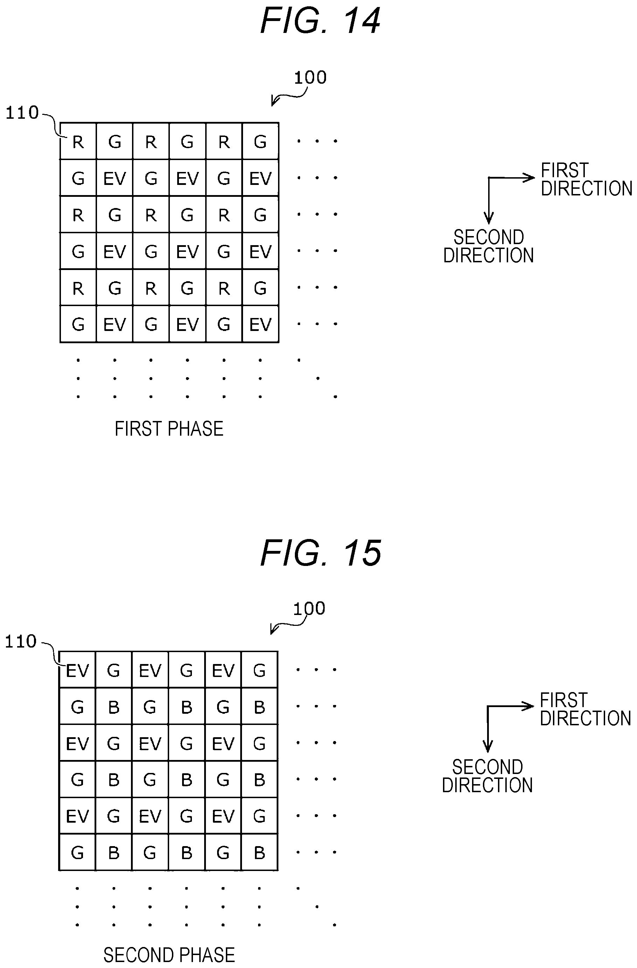

Figs. 14, 15, 16, and 17 are diagrams illustrating an example of a four-phase transition. As an example in which the four-phase transition is made, the control circuit 102 can control signals that are spatially and temporally output to the pixels 110 in the pixel array 100 in blocks of 2 × 2.

As illustrated in Fig. 14 as a first phase, the control circuit 102 performs control for outputting the second signals from a pixel 110 at a lower-right position of every 2 × 2 pixels in the pixel array 100 and outputting the first signals from the other pixels.

As illustrated in Fig. 15 as a second phase, the control circuit 102 performs control for outputting the second signals from a pixel 110 at an upper-left position of every 2 × 2 pixels in the pixel array 100 and outputting the first signals from the other pixels.

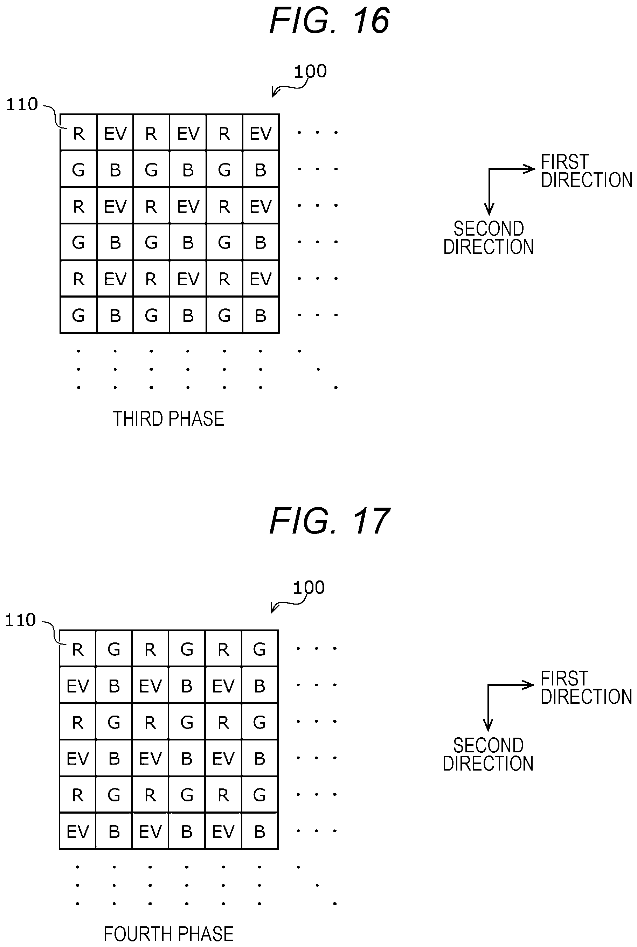

As illustrated in Fig. 16 as a third phase, the control circuit 102 performs control for outputting the second signals from a pixel 110 at an upper-right position of every 2 × 2 pixels in the pixel array 100 and outputting the first signals from the other pixels.

As illustrated in Fig. 17 as a fourth phase, the control circuit 102 performs control for outputting the second signals from a pixel 110 at a lower-left position of every 2 × 2 pixels in the pixel array 100 and outputting the first signals from the other pixels.

The first to the fourth phases can be switched, for example, at temporally periodic timing. The four-phase control can also be performed in this manner. In a case where this control is performed, for example, the pixels 110 may be controlled while sharing a reference voltage applied to obtain the second signal between every 2 × 2 pixels, or each pixel may be controlled uniquely.

For example, a capacitor that holds a reset voltage may be shared between every 2 × 2 pixels. By sharing a circuit in this manner, it is also possible to implement some processing, that is, event detection processing, for example, on the basis of a result of comparison between a voltage reset in another layer and an output voltage of a pixel that makes a second output in the layer. In a case where gradation information is output as the first signal and event detection information is output as the second signal, it is possible, by sharing capacitors, to reduce the second pixel circuit 120 that outputs the event detection information, whose circuit area tends to be larger than that of the first pixel circuit 118 that outputs the gradation information, and it is also possible to miniaturize the sensor as a whole.

Fig. 18 is an extension of the division in units of 2 × 2 pixels to division in units of 3 × 3 pixels. In this case, the control circuit 102 can appropriately output the second signals, for example, by periodically controlling nine phases.

For example, the control circuit 102 can control, with the pixels divided in units of 3 × 3, a first phase for outputting the second signal from upper left, a second phase for outputting the second signal from the center of an uppermost line,..., and a ninth phase for outputting the second signal from lower right at periodic timing.

Timing of outputting the second signal can be measured, and the sensor can be reduced similarly to the above.

As described above, with the solid-state imaging device according to the present embodiment, it is possible to spatially and temporally periodically control the pixels that output the second signals. By spatially periodically controlling the pixels belonging to the pixel array and time, the solid-state imaging device can obtain outputs of two types of signal for an entire image to be captured under high resolution and high frame rate.

### (Second Embodiment)

In the first embodiment, the pixels 110 that output the first signals and the pixels 110 that output the second signals in the same spatial period are arranged for the pixels 110 belonging to the pixel array 100. The arrangement of pixels is not limited to this, and arrangement of different signal outputs can be set in a partial area of the pixel array 100, instead.

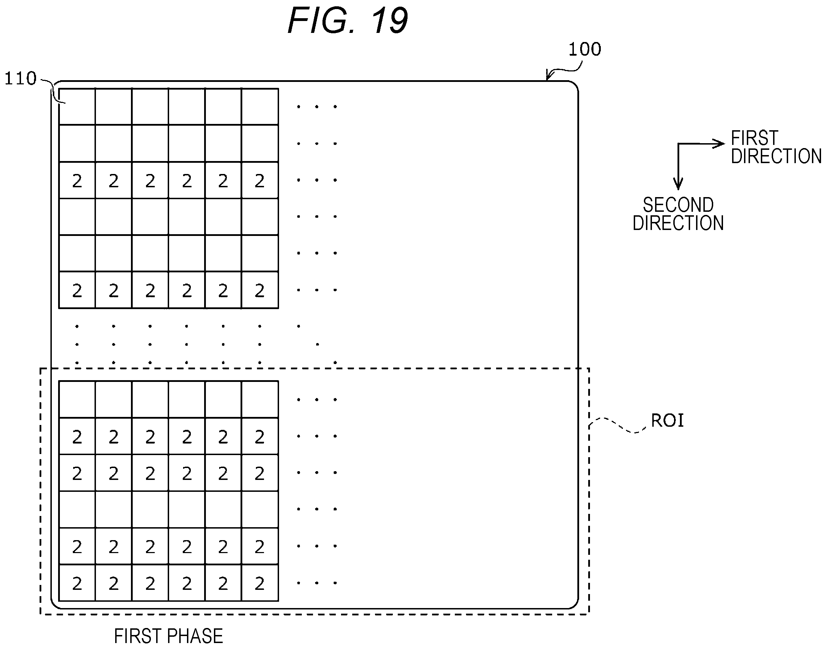

Figs. 19, 20, and 21 are diagrams illustrating an example of arrangement of signal outputs of the pixel 110 according to the present embodiment. Note that, in the following drawings the pixels 110 that output the second signals are represented by "2" and the pixels that output the first signals are represented by blanks as an example.

As illustrated in Fig. 19 as a first phase, the control circuit 102 controls the pixels 110 belonging to areas of the pixel array 100 other than a region ROI in such a way as to, as in Fig. 6, output the second signals from one of every three lines and output the first signals from the other two lines. The control circuit 102 controls the pixels 110 belonging to the region ROI of the pixel array 100, on the other hand, in such a way as to, as in Fig. 10, output the second signals from two of every three lines and output the first signals from the other one line.

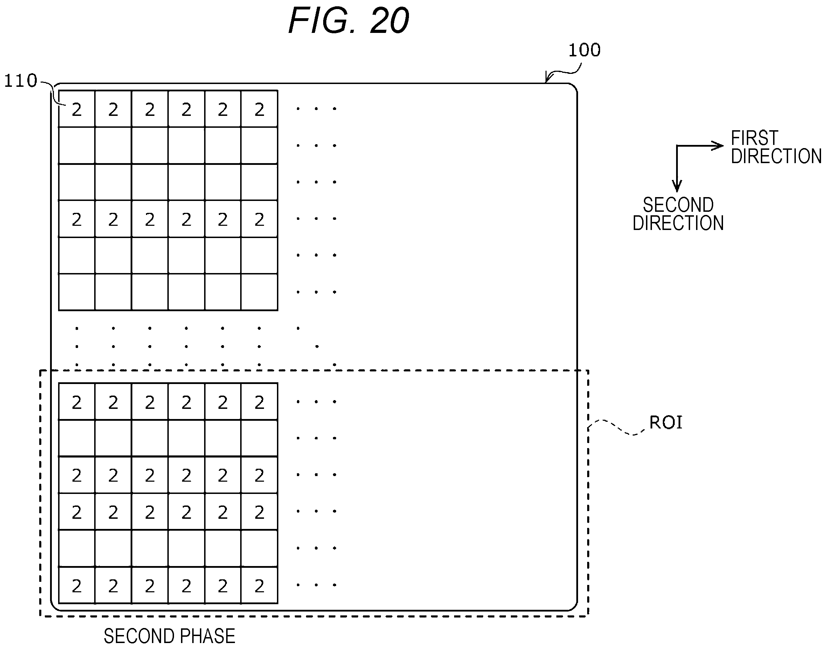

As illustrated in Fig. 20 as a second phase, the control circuit 102 controls the pixels 110 belonging to the areas of the pixel array 100 other than the region ROI in such a way as to, as in Fig. 7, output the second signals from one of every three lines and output the first signals from the other two lines. The control circuit 102 controls the pixels 110 belonging to the region ROI of the pixel array 100, on the other hand, in such a way as to, as in Fig. 11, output the second signals from two of every three lines and output the first signals from the other one line.

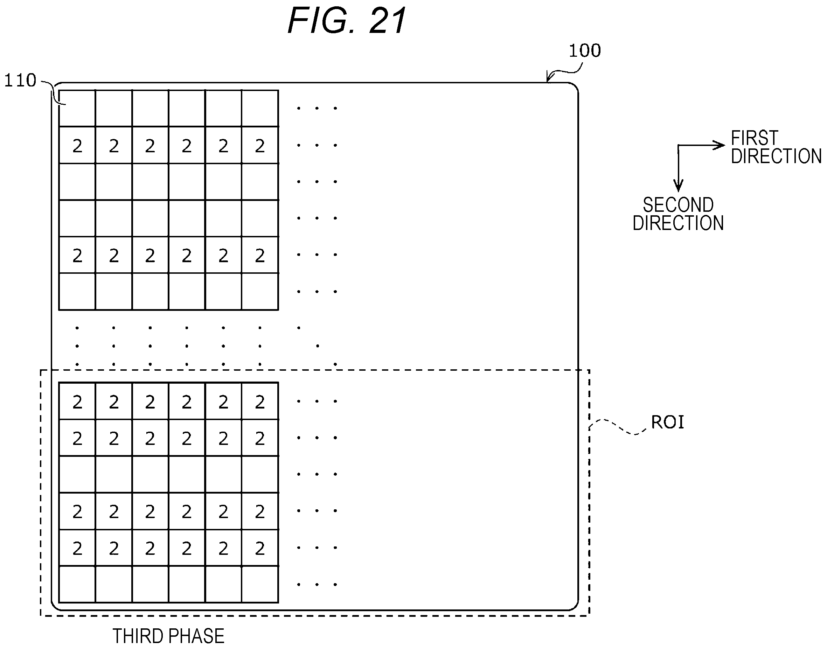

As illustrated in Fig. 21 as a third phase, the control circuit 102 controls the pixels 110 belonging to the areas of the pixel array 100 other than the region ROI in such a way as to, as in Fig. 8, output the second signals from one of every three lines and output the first signals from the other two lines. The control circuit 102 controls the pixels 110 belonging to the region ROI of the pixel array 100, on the other hand, in such a way as to, as in Fig. 12, output the second signals from two of every three lines and output the first signals from the other one line.

The pixel array 100 may thus be divided into areas in units of lines, and signals may be obtained with different duty ratios. In a case where it is desired to detect an event in nearby objects as in the case of an in-vehicle camera or to accurately measure a distance to an object in an area close to a vehicle body, for example, the solid-state imaging device 1 can obtain an appropriate signal with high density on a side of the pixel array 100 closer to the vehicle body.

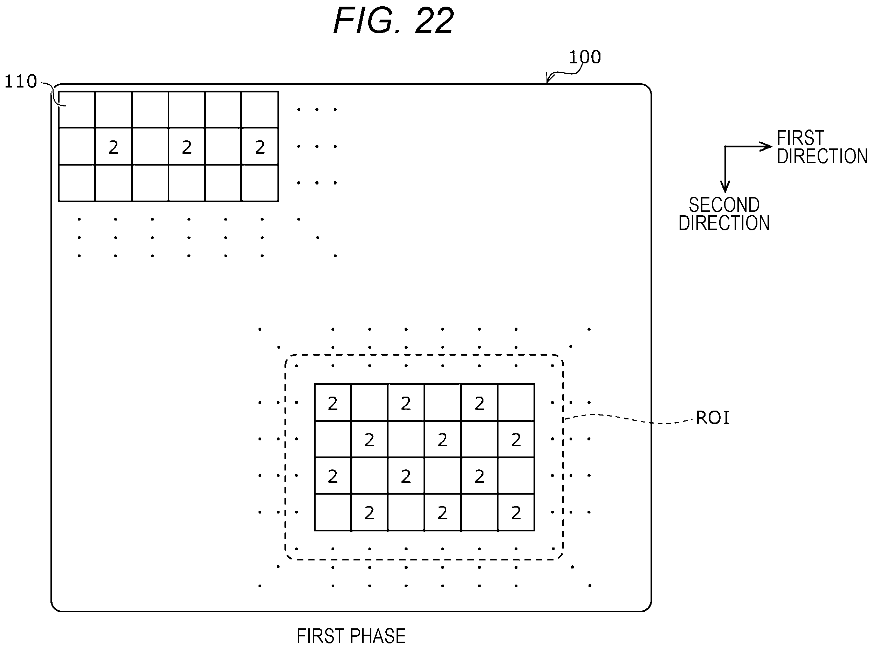

Figs. 22, 23, 24, and 25 are diagrams illustrating another example in which the region ROI is set. The region ROI can be set at any position in the pixel array 100 as illustrated in these drawings.

As illustrated in Fig. 22 as a first phase, the control circuit 102 may control the pixels 110 belonging to regions other than the region ROI of the pixel array 100, in such a way as to, as in Fig. 14, output the second signal from one of 2 × 2 pixels included in each block and output the first signals from the other three pixels. With respect to the pixels 110 belonging to the region ROI, on the other hand, the control circuit 102 may output the second signals from an upper-left and lower-right pixels 110 and the first signals from upper-right and lower-left pixels 110 in each block including 2 × 2 pixels.

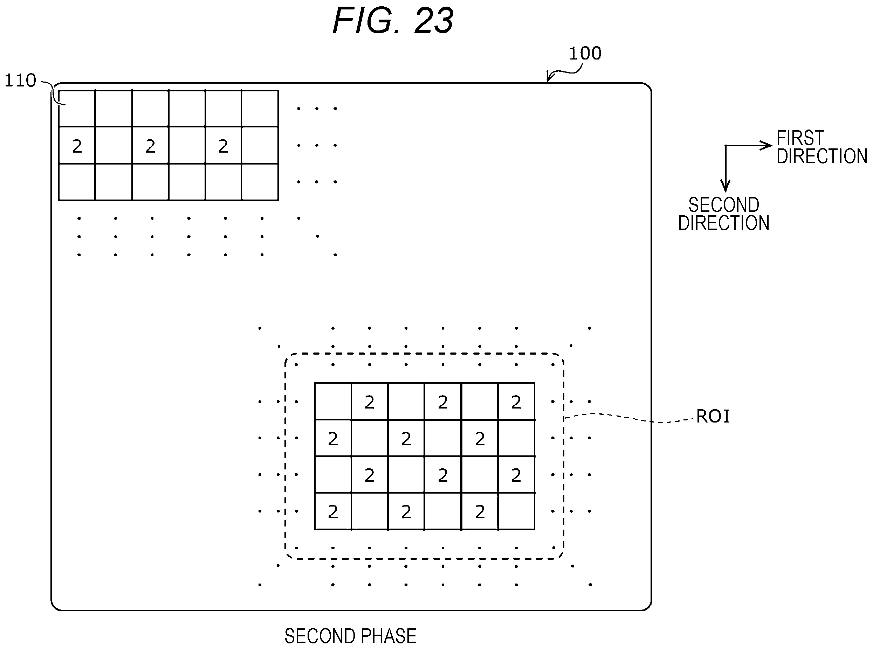

As illustrated in Fig. 23 as a second phase, the control circuit 102 may control the pixels 110 belonging to the regions other than the region ROI of the pixel array 100 in such a way as to, as in Fig. 17, output the second signal from one of the 2 × 2 pixels included in each block and output the first signals from the other three pixels. With respect to the pixels 110 belonging to the region ROI, on the other hand, the control circuit 102 may output the second signals from the upper-right and lower-left pixels 110 and the second signals from the upper-left and lower-right pixels 110 in each block including 2 × 2 pixels.

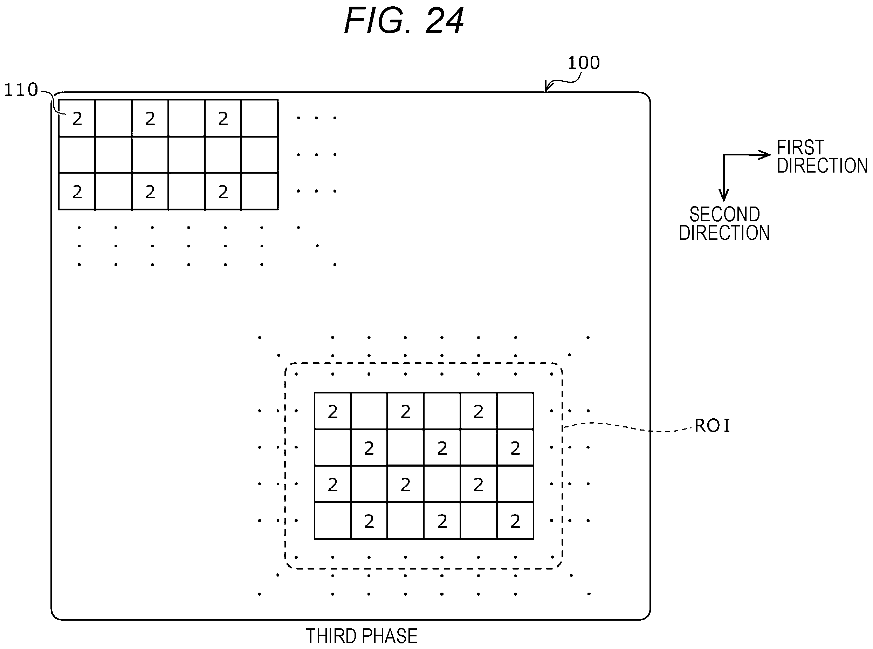

As illustrated in Fig. 24 as a third phase, the control circuit 102 may control the pixels 110 belonging to the regions other than the region ROI of the pixel array 100 in such a way as to, as in Fig. 15, output the second signal from one of the 2 × 2 pixels included in each block and output the first signals from the other three pixels. With respect to the pixels 110 belonging to the region ROI, on the other hand, the control circuit 102 may output the second signals from an upper-left and lower-right pixels 110 and the first signals from upper-right and lower-left pixels 110 in each block including 2 × 2 pixels.

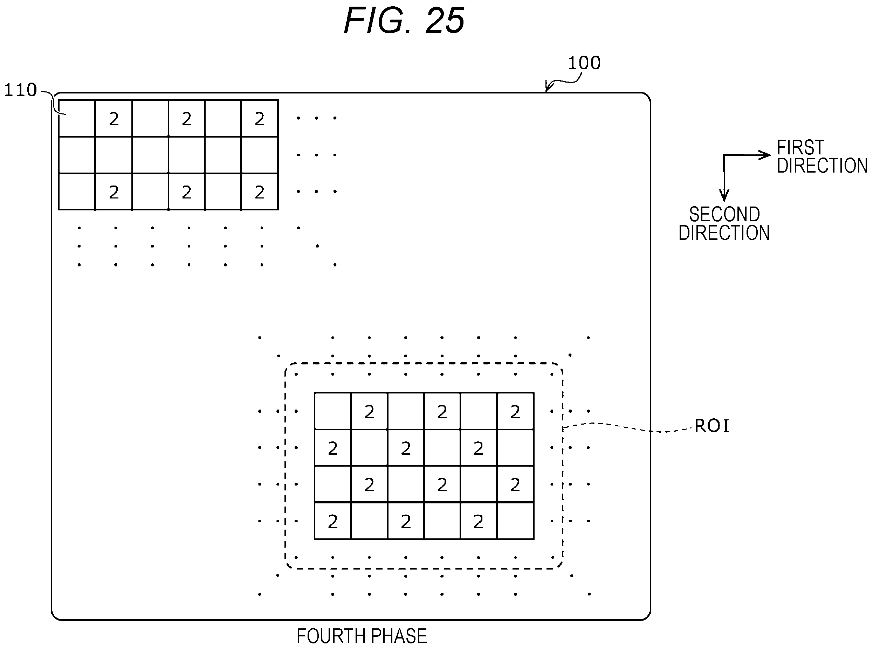

As illustrated in Fig. 25 as a fourth phase, the control circuit 102 may control the pixels 110 belonging to the regions other than the region ROI of the pixel array 100 in such a way as to, as in Fig. 16, output the second signal from one of the 2 × 2 pixels included in each block and output the first signals from the other three pixels. With respect to the pixels 110 belonging to the region ROI, on the other hand, the control circuit 102 may output the second signals from the upper-right and lower-left pixels 110 and the second signals from the upper-left and lower-right pixels 110 in each block including 2 × 2 pixels.

As described above, with the solid-state imaging device according to the present embodiment, the region ROI can be set not for each line but as a set of any pixels 110. Furthermore, as can be seen from the examples of Figs. 22 to 25, the number of phases may be different between the inside and the outside of the region ROI. Although four phases and two phases are mixed in the above example, other numbers of phases, such as three phases and two phases, may be mixed, instead. For example, the control circuit 102 can also perform control for outputting the first signals at a density of 1/3 and output the second signals at a density of 2/3 in the region ROI of Fig. 22 or the like in each line of the region ROI of Fig. 19 or the like.

The above is an example in which the region ROI is set, and setting of a position, a shape, the number, or the like of the region ROI may be set as desired. Furthermore, the region ROI need not be fixed, and the position, shape, number, or the like thereof may be changed at appropriate timing in accordance with a situation.

### (Third Embodiment)

Although it has been described in the second embodiment that the fixed region ROI is set, it will be described in the present embodiment that the control circuit 102 changes the position, shape, and the like of the region ROI as desired.

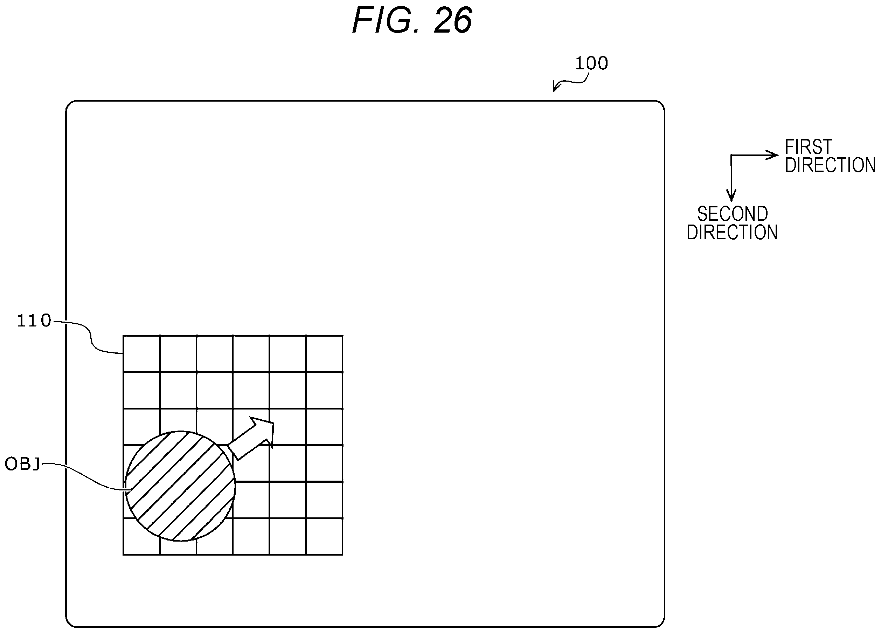

Fig. 26 is a diagram illustrating an example of output arrangement of the first signals and the second signals according to the embodiment. The solid-state imaging device 1 can detect movement of an object OBJ on the basis of a result of processing of obtained gradation information as the first signals by the signal processing circuit 108 or obtained event detection information as the second signals.

In a case where gradation information is used, the signal processing circuit 108 may detect the object OBJ by, for example, any object recognition method. Furthermore, the signal processing circuit 108 may simply determine, in a region where a change in gradation is large, that an object is moving, and notify the control circuit 102 of the determination result or a region that can be obtained from the determination result.

In a case where event detection information is used, for example, the signal processing circuit 108 may determine, in a region including pixels 110 in which an event has been detected, that an object is operating.

In other words, the control circuit 102 can predict that an event will occur on the basis of an output result of the first signals or the second signals in the pixel array 100, determine, on the basis of the prediction result, timing of selecting whether each of the plurality of pixels 110 belonging to the pixel array 100 is connected to the first pixel circuit 118 or the second pixel circuit 102, and control the arrangement of the pixels 110 that output the second signals.

In particular, the control circuit 102 may obtain event detection signals as the second signals, set a region on the basis of this event information, and perform control for switching whether pixels 110 in the region are to output the first signals or the second signals.

The control circuit 102 may calculate an optical flow from the movement of the object OBJ and set the arrangement of the pixels 110 from which the second signals are to be obtained on the basis of the optical flow.

If it is estimated, as a result of the obtaining of the optical flow, that the object OBJ will move in a direction indicated by an arrow in the drawing, the control circuit 102 performs control for arranging the pixels 110 that output the second signals on the basis of the estimated direction of movement.

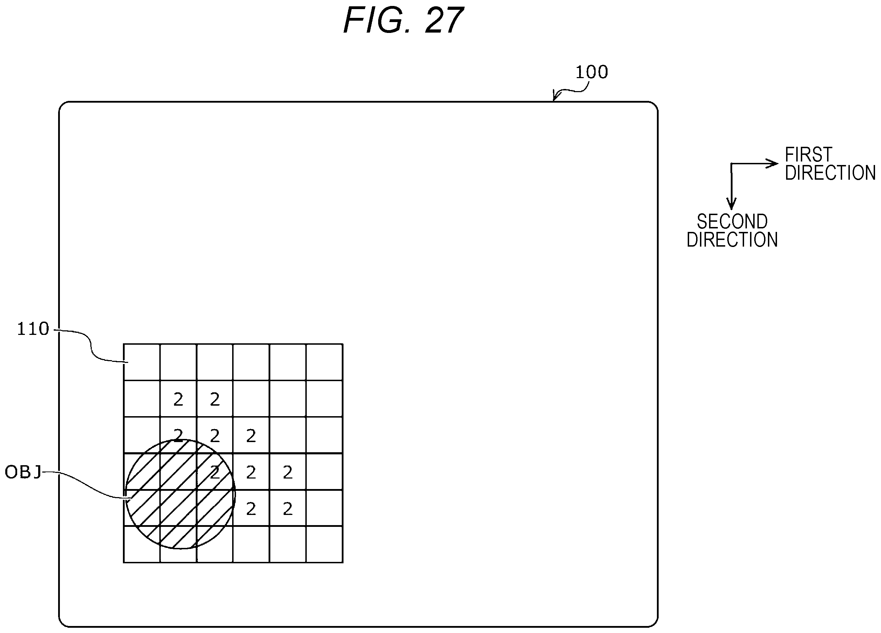

Fig. 27 illustrates an arrangement example of the pixels 110 that output the second signals on the basis of the direction of movement and speed of the object estimated from the optical flow in the state of Fig. 26. As illustrated in the drawing, the control circuit 102 may perform control for arranging pixels 110 in the direction of movement estimated from the optical flow as the pixels 110 that output the second signals. As a region to be switched, for example, the control circuit 102 may set a predetermined region ahead in the direction of movement of the object OBJ, and may perform control for switching between outputting the first signals and outputting the second signals in the predetermined region.

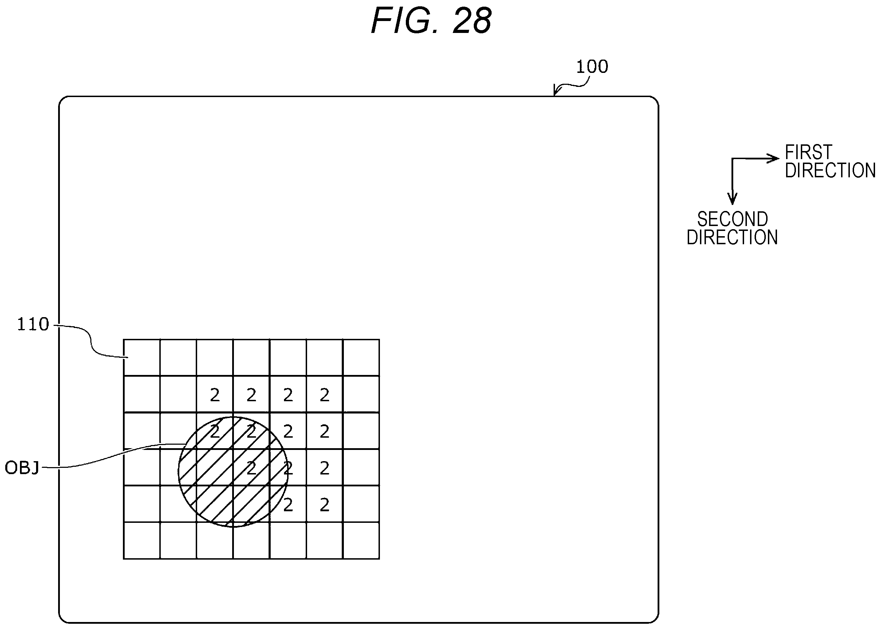

Fig. 28 is a diagram illustrating an arrangement example of the pixels 110 that output the second signals after the optical flow in Fig. 27 is obtained. As illustrated in Figs. 27 and 28, the control circuit 102 may perform control for arranging the pixels 110 that output the second signals such that the movement of the object OBJ can be captured in the downward direction in which the movement of the object OBJ has been estimated.

The control circuit 102 may thus obtain an optical flow of an object present in the pixel array 100. The control circuit 102 may set a region in the pixel array 100 on the basis of the optical flow and perform control for selecting whether to output the first signals or the second signals from pixels 110 belonging to the region.

The region may be set as a region including the object OBJ and a margin provided in the direction of movement of the object OBJ estimated from the optical flow. The control circuit 102 may perform control for switching all the pixels 110 in this region from a pixel that outputs the first signal to a pixel that outputs the second signal. As another example, the control circuit 102 may switch at least a subset of the pixels 110 from a pixel that outputs the first signal to a pixels that outputs the second signal, instead of all the pixels 110 belonging to the region.

As described above, with the solid-state imaging device according to the present embodiment, it is possible to detect a moving object and arrange pixels that output the second signals on the basis of the detection result. By arranging the pixels that output the second signals like this, it is possible to accurately track an object and to obtain the first signals (for example, gradation information) having higher resolution and a higher frame rate at positions where there is no movement.

### (Fourth Embodiment)

In the present embodiment, another example of the extraction of a region and the arrangement of pixels that output the second signals will be described.

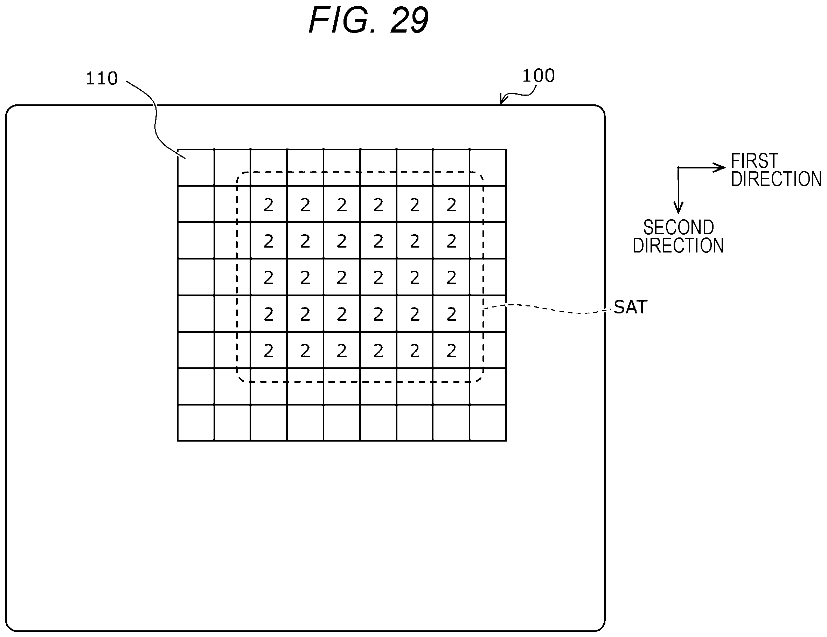

Fig. 29 is a diagram illustrating an example of arrangement of pixels that output the first signals and the second signals in a case where there are pixels 110 whose luminance values are saturated in the pixel array 100. For example, a saturation region SAT is a region where the luminance values are saturated. Although the saturation region SAT is represented as a rectangular region here, a shape and size are not limited to this. For example, an image captured by an in-vehicle camera might obtain such a region of saturated pixels 110 at an exit of a tunnel or the like.

In pixels whose luminance values are saturated, it is difficult to appropriately obtain gradation information. In a region indicating such gradation values, pixels that output the second signals instead of the first signals may be appropriately arranged. With such an arrangement, event information can be appropriately obtained in a region where gradation information cannot be appropriately obtained.

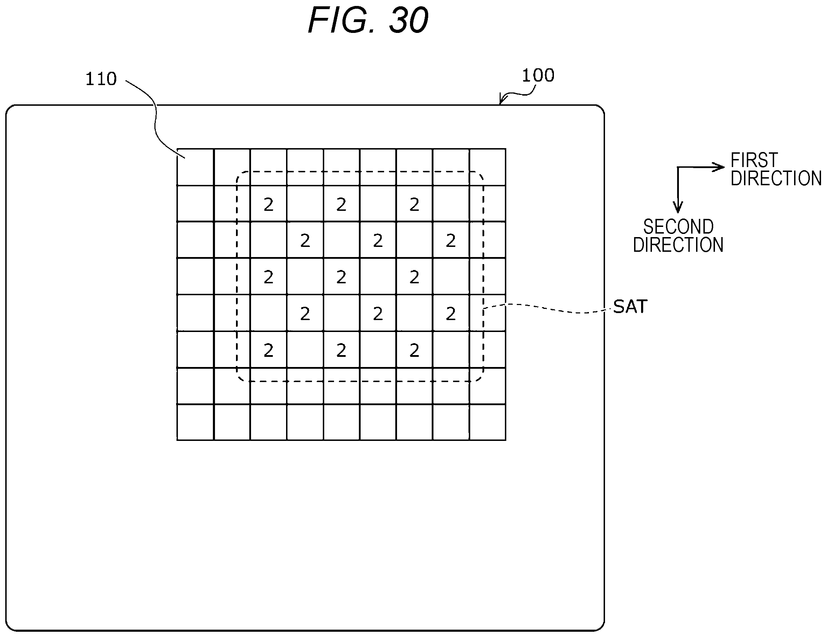

Fig. 30 is a diagram illustrating another example according to the present embodiment. As illustrated in this drawing, the control circuit 102 may arrange, that is, periodically arrange, for example, pixels that output the first signals and pixels that output the second signals for the pixels 110 belonging to the saturation region SAT. Similarly to the above-described embodiment, control for periodically switching between two phases may be performed in the arrangement of Fig. 30.

Furthermore, the control circuit 102 can also perform control with appropriate switching timing and arrangement of four phases, nine phases, or the like, instead of two phases.

As described above, with the solid-state imaging device according to the present embodiment, it is possible to appropriately obtain the second signals by appropriately arranging the pixels that output the second signals in a region where values of the first signals are saturated. If an event occurs in a saturated region in a case where the first signals are gradation signals and the second signals are event detection signals, for example, the solid-state imaging device 1 can obtain gradation values with high accuracy and high resolution in other regions and quickly respond to the detection of the event.

### (Fifth Embodiment)

In the present embodiment, another example of the extraction and setting of a region will be described.

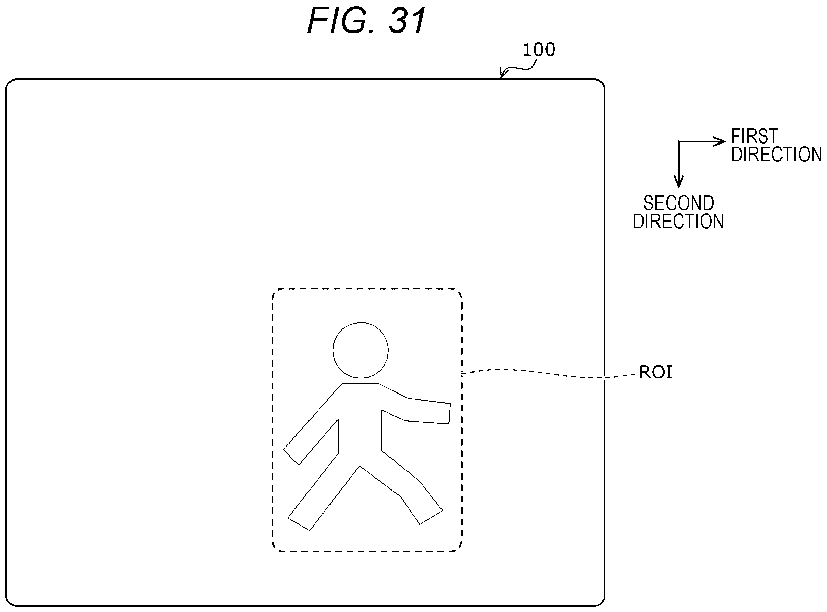

Fig. 31 is a diagram illustrating a mode in which the pixels 110 belonging to the pixel array 100 obtain gradation values as the first signals. The signal processing circuit 108 detects a target such as a human on the basis of gradation information. The target is not limited to a human, and may be any object.

The control circuit 102 extracts a region ROI in which the target has been detected, and arranges the pixels 110 that output the second signals in the region ROI. Note that the region ROI may have a rectangular shape as illustrated in the drawing, or may have another shape.

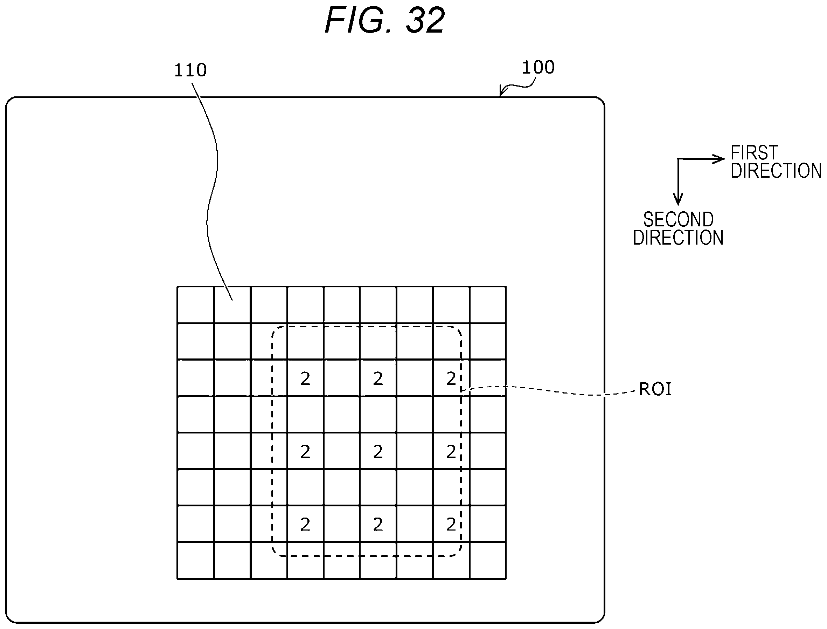

Fig. 32 is a diagram illustrating an example in which the pixels 110 that output the second signals are arranged in the region ROI. For example, the control circuit 102 may perform control for arranging pixels 110 that output the second signals which make a four-phase transition. The signal processing circuit 108 or an external or internal processing circuit can achieve tracking of the target or the like on the basis of event detection information output from the pixel array 100.

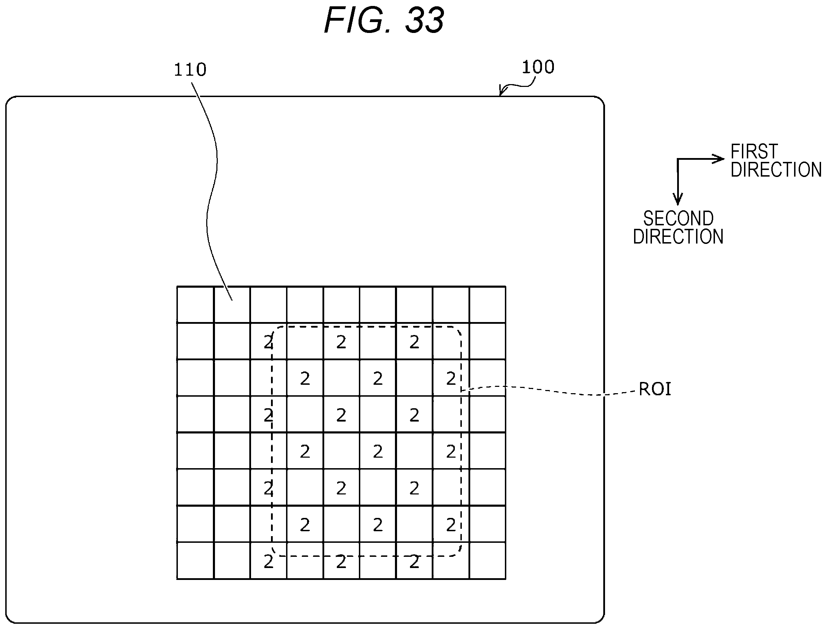

Fig. 33 is a diagram illustrating another example in which the pixels 110 that output the second signals are arranged in the region ROI. For example, the control circuit 102 may perform control for arranging pixels 110 that output the second signals which make a two-phase transition. Similarly to Fig. 32, the solid-state imaging device 1 can achieve tracking of a target or the like on the basis of event detection information.

Note that the modes illustrated in Figs. 32 and 33 are not limited to being applied individually. For example, the solid-state imaging device 1 may detect a target and set a region ROI as illustrated in Fig. 31 and then arrange the pixels 110 that make a four-phase transition as illustrated in Fig. 32.

In a case where movement becomes small in this state, the state of Fig. 31 may be established. In a case where the number of pixels 110 that detect an event increases in the region ROI in the state of Fig. 32, on the other hand, control may be performed in such a way as to achieve arrangement for the four-phase transition illustrated in Fig. 33.

In other words, as an example, the solid-state imaging device 1 can obtain gradation information as the first signals in the pixel array 100 and determine, on the basis of the gradation information, timing of selecting whether each of the plurality of pixels 110 belonging to the pixel array 100 is to be connected to the first pixel circuit 118 or the second pixel circuit 120.

The control circuit 102 can set the region ROI on the basis of changes in the intensity of the gradation information. Moreover, the control circuit 102 can select whether the pixels 110 in the region ROI are to be connected to the first pixel circuit 118 or the second pixel circuit 120.

The solid-state imaging device 1 can also set the region ROI on the basis of a result of target recognition or object recognition that can be obtained from the gradation information.

As described above, with the solid-state imaging device 1 according to the present embodiment, the region ROI can be set on the basis of event detection information obtained as the second signals, and a density in the region ROI with which the second signals are to be output can be changed on the basis of event detection information in the set region ROI. With such control, the solid-state imaging device 1 can obtain event detection information with high accuracy and high resolution while obtaining gradation information with high resolution.

### (Sixth Embodiment)

The solid-state imaging device 1 in the present disclosure can also be applied to a technique of eye tracking for smart glasses or the like. In smart glasses or the like, the solid-state imaging device 1 may capture an image from a front side of the eyes, or may capture an image of reflected light by reflecting infrared light using a grating formed in a hologram or the like provided in the glasses.

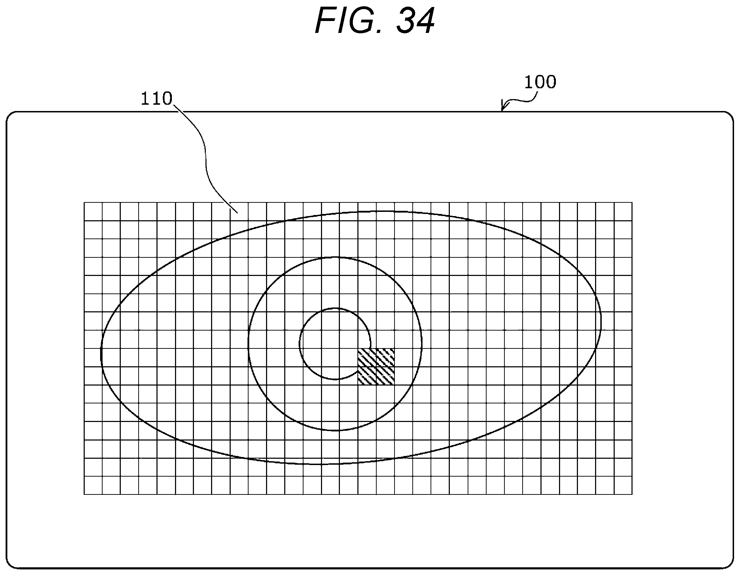

Fig. 34 is a diagram illustrating an example in which an image of an eye is obtained in the pixel array 100. The solid-state imaging device 1 can also receive reflected light by irradiating eyes using an infrared light source provided inside or outside the solid-state imaging device 1. When infrared light is used in this manner, reflected light from the retina forms a Purkinje image arranged at a predetermined position with respect to an outline of the eye. For example, the Purkinje image is formed at a position of pixels 110 indicated by hatching in the drawing.

Note that the four pixels 110 are arranged at the position where the Purkinje image is generated in view of the ease of viewing of the drawing, how pixels 110 are arranged is not limited to this. For example, the pixels 110 may be arranged more densely, and in this case, more pixels 110 serve as pixels 110 indicating the position of the Purkinje image. Furthermore, the solid-state imaging device 1 may obtain information regarding incident light related to the position of the Purkinje image in four or less pixels 110.

The control circuit 102 may control the pixels 110 arranged at the position of the Purkinje image as pixels that obtains gradation information as the first signals. With this arrangement, for example, in a case where the smart glasses or the like are displaced with respect to the eyes, the signal processing circuit 108 or the like can detect that the Purkinje image can no longer be obtained, and pixels 110 that obtain gradation information at a position of a new Purkinje image can be arranged. By determining the position of the pixels 110 at which the Purkinje image is obtained, the solid-state imaging device 1 can also obtain information regarding an eye region, a region in which the pupil moves, and the like.

The control circuit 102 can set the first signals for obtaining gradation information at the pixels 110 arranged at the position of the Purkinje image, and can also control the second signals for obtaining event detection information in appropriate arrangement in order to improve accuracy of eye tracking.

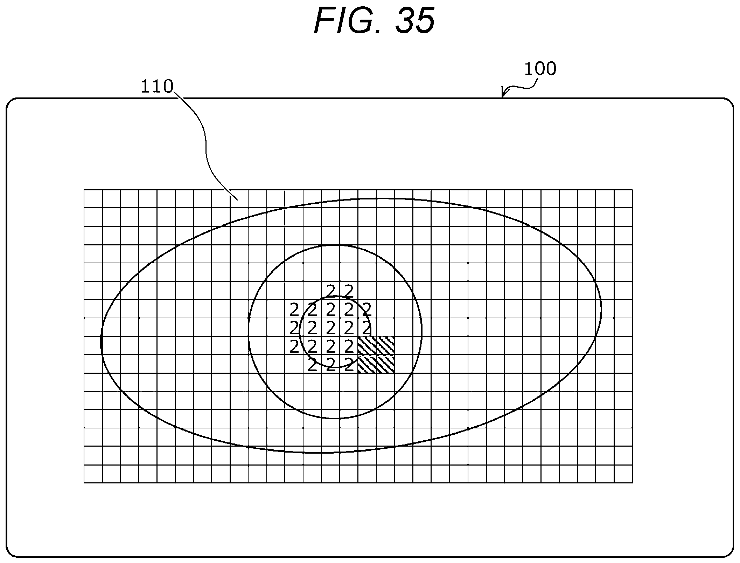

Fig. 35 is a diagram illustrating an example of arrangement of pixels that obtain the first signals and pixels that the second signals in the pixel array 100. Similarly to the above, "2" in a pixel indicates a pixel that obtains the second signal.

As illustrated in this drawing, the control circuit 102 may determine a position of the pupil and arrange pixels 110 that output the second signals at the position of the pupil. A pupil is a part of an eye that moves a lot, and by arranging the pixels that output the second signals in this manner, the accuracy of the eye tracking for obtaining the position of the pupil, that is, a direction of a line of sight, can be improved.

Furthermore, the control circuit 102 can also perform iris recognition or the like based on gradation information by arranging the pixels 110 that output the first signals for a region of the iris around the pupil.

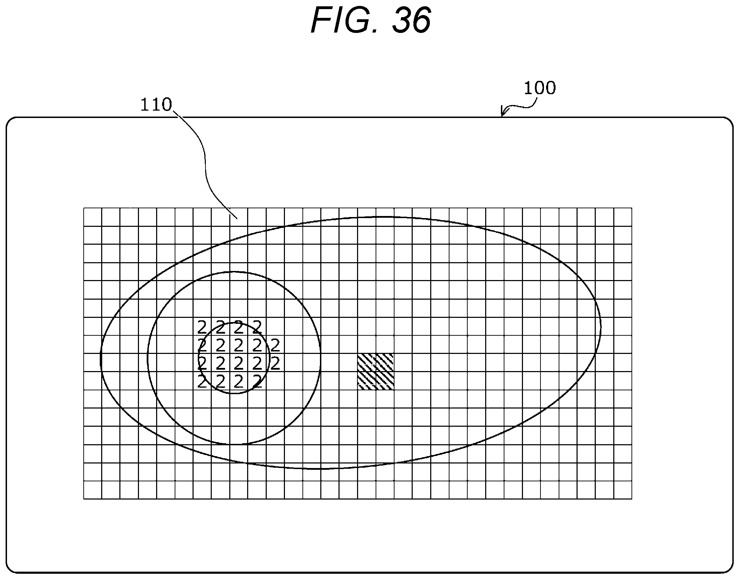

Fig. 36 is a diagram illustrating arrangement of pixels in a case of a different position of the pupil. As illustrated in this drawing, the control circuit 102 can arrange the pixels 110 that obtain the second signals that are the event detection information on the basis of the position of the pupil. As illustrated in the drawings, regardless of whether or not the pixels overlap the pupil, the pixels 110 that obtain the first signals are arranged as the pixels 110 indicated by hatching at the position of the Purkinje image.

Note that, in the case of pixels 110 capable of obtaining a more high-resolution image, the control circuit 102 can also set any number of pixels 110 around the pupil as the pixels 110 that obtain the second signals, and in this case, the movement of the pupil can be tracked more accurately.

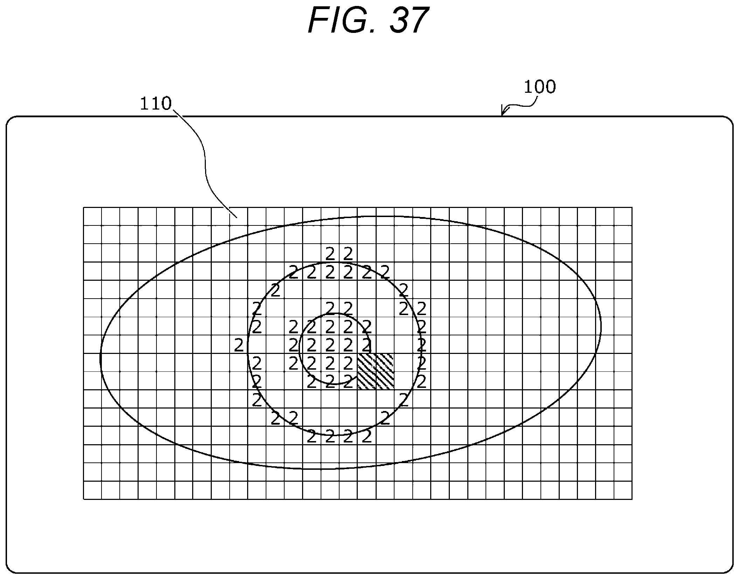

Furthermore, as illustrated in Fig. 37, the control circuit 102 can also arrange a region around the iris as the pixels 110 that obtain the second signals. By arranging event detection pixels in this manner, the movement of the pupil can be detected more accurately.

As described above, with the solid-state imaging device according to the present embodiment, for example, a Purkinje image is detected in eye tracking to appropriately determine a region of the eye in the pixel array, event detection pixels are arranged at a position of the pupil so that movement of the pupil can be accurately tracked, and person authentication or the like can be accurately achieved from gradation information regarding the iris.

The solid-state imaging element 10 in the present disclosure can be mounted as one chip as desired. This chip may be achieved by a plurality of semiconductor layers stacked on each other.

For example, pixels and other circuits may be formed on each of two semiconductor substrates, and these substrates may be stacked one each other by any method (for example, CoC: chip on chip, CoW: chip on wafer, or WoW: wafer on wafer). At least light receiving elements (photoelectric conversion elements) may be provided in an upper layer, and the other circuits may be appropriately allocated to upper and lower layers. These layers are electrically connected to each other by any appropriate method (for example, via holes or microbumps).

Note that the number of layers need not be two, and the pixels and the other circuits may be formed on one semiconductor substrate or may be formed on three or more semiconductor substrates, instead.

The technology according to the present disclosure can be applied to various products. For example, the technology according to the present disclosure may also be implemented as a device mounted on any kind of mobile body such as an automobile, an electric automobile, a hybrid electric automobile, a motorcycle, a bicycle, a personal mobility, an airplane, a drone, a ship, a robot, a construction machine, an agricultural machine (tractor), or the like.

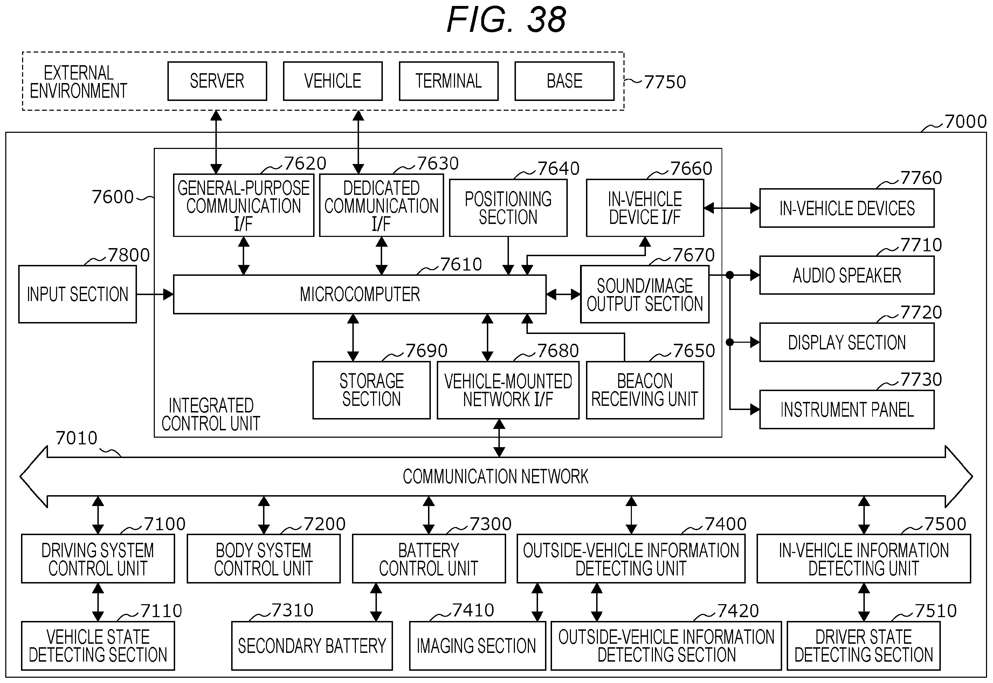

Fig. 38 is a block diagram illustrating a schematic configuration example of a vehicle control system 7000 as an example of a mobile body control system to which the technology of the present disclosure can be applied. The vehicle control system 7000 includes a plurality of electronic control units connected to each other via a communication network 7010. In the example illustrated in Fig. 38, the vehicle control system 7000 includes a driving system control unit 7100, a body system control unit 7200, a battery control unit 7300, an outside-vehicle information detecting unit 7400, an in-vehicle information detecting unit 7500, and an integrated control unit 7600. The communication network 7010 connecting the plurality of control units to each other may, for example, be a vehicle-mounted communication network compliant with an arbitrary standard such as controller area network (CAN), local interconnect network (LIN), local area network (LAN), FlexRay (registered trademark), or the like.

Each of the control units includes: a microcomputer that performs arithmetic processing according to various kinds of programs; a storage section that stores the programs executed by the microcomputer, parameters used for various kinds of operations, or the like; and a driving circuit that drives various kinds of control target devices. Each of the control units further includes: a network interface (I/F) for performing communication with other control units via the communication network 7010; and a communication I/F for performing communication with a device, a sensor, or the like within and without the vehicle by wire communication or radio communication. In Fig. 38, a microcomputer 7610, a general-purpose communication I/F 7620, a dedicated communication I/F 7630, a positioning section 7640, a beacon receiving section 7650, an in-vehicle device I/F 7660, a sound/image output section 7670, a vehicle-mounted network I/F 7680, and a storage section 7690 are illustrated as functional components of the integrated control unit 7600. The other control units similarly include a microcomputer, a communication I/F, a storage section, and the like.

The driving system control unit 7100 controls the operation of devices related to the driving system of the vehicle in accordance with various kinds of programs. For example, the driving system control unit 7100 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like. The driving system control unit 7100 may have a function as a control device of an antilock brake system (ABS), electronic stability control (ESC), or the like.

The driving system control unit 7100 is connected with a vehicle state detecting section 7110. The vehicle state detecting section 7110, for example, includes at least one of a gyro sensor that detects the angular velocity of axial rotational movement of a vehicle body, an acceleration sensor that detects the acceleration of the vehicle, and sensors for detecting an amount of operation of an accelerator pedal, an amount of operation of a brake pedal, the steering angle of a steering wheel, an engine speed or the rotational speed of wheels, and the like. The driving system control unit 7100 performs arithmetic processing using a signal input from the vehicle state detecting section 7110, and controls the internal combustion engine, the driving motor, an electric power steering device, the brake device, and the like.

The body system control unit 7200 controls the operation of various kinds of devices provided to the vehicle body in accordance with various kinds of programs. For example, the body system control unit 7200 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 7200. The body system control unit 7200 receives these input radio waves or signals, and controls a door lock device, the power window device, the lamps, or the like of the vehicle.

The battery control unit 7300 controls a secondary battery 7310, which is a power supply source for the driving motor, in accordance with various kinds of programs. For example, the battery control unit 7300 is supplied with information about a battery temperature, a battery output voltage, an amount of charge remaining in the battery, or the like from a battery device including the secondary battery 7310. The battery control unit 7300 performs arithmetic processing using these signals, and performs control for regulating the temperature of the secondary battery 7310 or controls a cooling device provided to the battery device or the like.

The outside-vehicle information detecting unit 7400 detects information about the outside of the vehicle including the vehicle control system 7000. For example, the outside-vehicle information detecting unit 7400 is connected with at least one of an imaging section 7410 and an outside-vehicle information detecting section 7420. The imaging section 7410 includes at least one of a time-of-flight (ToF) camera, a stereo camera, a monocular camera, an infrared camera, and other cameras. The outside-vehicle information detecting section 7420, for example, includes at least one of an environmental sensor for detecting current atmospheric conditions or weather conditions and a peripheral information detecting sensor for detecting another vehicle, an obstacle, a pedestrian, or the like on the periphery of the vehicle including the vehicle control system 7000.

The environmental sensor, for example, may be at least one of a rain drop sensor detecting rain, a fog sensor detecting a fog, a sunshine sensor detecting a degree of sunshine, and a snow sensor detecting a snowfall. The peripheral information detecting sensor may be at least one of an ultrasonic sensor, a radar device, and a LIDAR device (Light detection and Ranging device, or Laser imaging detection and ranging device). Each of the imaging section 7410 and the outside-vehicle information detecting section 7420 may be provided as an independent sensor or device, or may be provided as a device in which a plurality of sensors or devices are integrated.

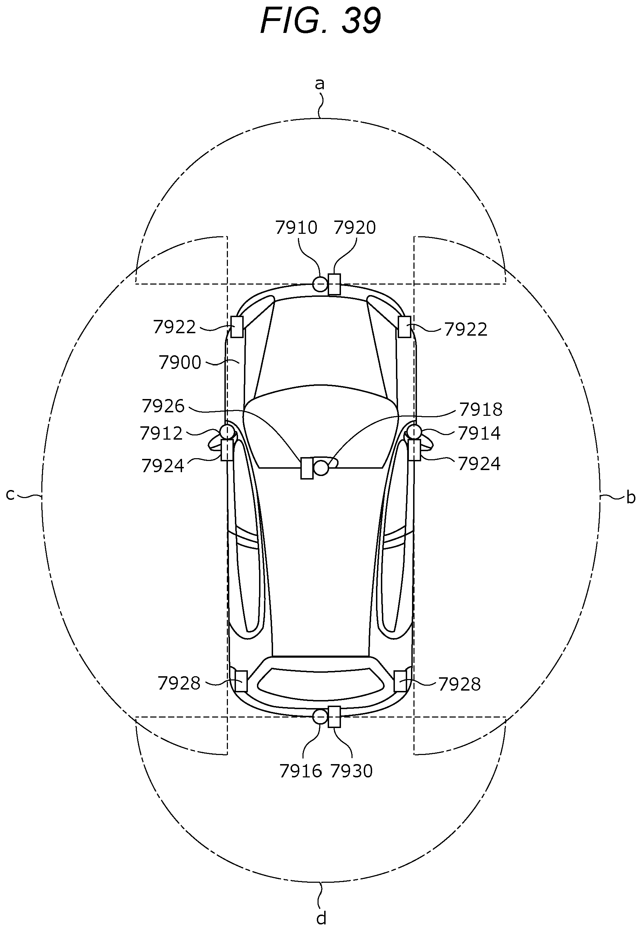

Here, Fig. 39 illustrates an example of installation positions of the imaging section 7410 and the outside-vehicle information detecting section 7420. Imaging sections 7910, 7912, 7914, 7916, and 7918 are, for example, disposed at at least one of positions on a front nose, sideview mirrors, a rear bumper, and a back door of the vehicle 7900 and a position on an upper portion of a windshield within the interior of the vehicle. The imaging section 7910 provided to the front nose and the imaging section 7918 provided to the upper portion of the windshield within the interior of the vehicle obtain mainly an image of the front of the vehicle 7900. The imaging sections 7912 and 7914 provided to the sideview mirrors obtain mainly an image of the sides of the vehicle 7900. The imaging section 7916 provided to the rear bumper or the back door obtains mainly an image of the rear of the vehicle 7900. The imaging section 7918 provided to the upper portion of the windshield within the interior of the vehicle is used mainly to detect a preceding vehicle, a pedestrian, an obstacle, a signal, a traffic sign, a lane, or the like.

Note that Fig. 39 illustrates an example of the imaging range of each of the imaging sections 7910, 7912, 7914, and 7916. An imaging range a represents the imaging range of the imaging section 7910 provided to the front nose. Imaging ranges b and c respectively represent the imaging ranges of the imaging sections 7912 and 7914 provided to the sideview mirrors. An imaging range d represents the imaging range of the imaging section 7916 provided to the rear bumper or the back door. A bird's-eye image of the vehicle 7900 as viewed from above can be obtained by superimposing image data imaged by the imaging sections 7910, 7912, 7914, and 7916, for example.

Outside-vehicle information detecting sections 7920, 7922, 7924, 7926, 7928, and 7930 provided to the front, rear, sides, and corners of the vehicle 7900 and the upper portion of the windshield within the interior of the vehicle may be, for example, an ultrasonic sensor or a radar device. The outside-vehicle information detecting sections 7920, 7926, and 7930 provided to the front nose of the vehicle 7900, the rear bumper, the back door of the vehicle 7900, and the upper portion of the windshield within the interior of the vehicle may be a LIDAR device, for example. These outside-vehicle information detecting sections 7920 to 7930 are used mainly to detect a preceding vehicle, a pedestrian, an obstacle, or the like.

Referring back to Fig. 38, the description will be continued. The outside-vehicle information detecting unit 7400 makes the imaging section 7410 image an image of the outside of the vehicle, and receives imaged image data. In addition, the outside-vehicle information detecting unit 7400 receives detection information from the outside-vehicle information detecting section 7420 connected to the outside-vehicle information detecting unit 7400. In a case where the outside-vehicle information detecting section 7420 is an ultrasonic sensor, a radar device, or a LIDAR device, the outside-vehicle information detecting unit 7400 transmits an ultrasonic wave, an electromagnetic wave, or the like, and receives information of a received reflected wave. On the basis of the received information, the outside-vehicle information detecting unit 7400 may perform processing of detecting an object such as a human, a vehicle, an obstacle, a sign, a character on a road surface, or the like, or processing of detecting a distance thereto. The outside-vehicle information detecting unit 7400 may perform environment recognition processing of recognizing a rainfall, a fog, road surface conditions, or the like on the basis of the received information. The outside-vehicle information detecting unit 7400 may calculate a distance to an object outside the vehicle on the basis of the received information.

In addition, on the basis of the received image data, the outside-vehicle information detecting unit 7400 may perform image recognition processing of recognizing a human, a vehicle, an obstacle, a sign, a character on a road surface, or the like, or processing of detecting a distance thereto. The outside-vehicle information detecting unit 7400 may subject the received image data to processing such as distortion correction, alignment, or the like, and combine the image data imaged by a plurality of different imaging sections 7410 to generate a bird's-eye image or a panoramic image. The outside-vehicle information detecting unit 7400 may perform viewpoint conversion processing using the image data imaged by the imaging section 7410 including the different imaging parts.

The in-vehicle information detecting unit 7500 detects information about the inside of the vehicle. The in-vehicle information detecting unit 7500 is, for example, connected with a driver state detecting section 7510 that detects the state of a driver. The driver state detecting section 7510 may include a camera that images the driver, a biosensor that detects biological information of the driver, a microphone that collects sound within the interior of the vehicle, or the like. The biosensor is, for example, disposed in a seat surface, the steering wheel, or the like, and detects biological information of an occupant sitting in a seat or the driver holding the steering wheel. On the basis of detection information input from the driver state detecting section 7510, the in-vehicle information detecting unit 7500 may calculate a degree of fatigue of the driver or a degree of concentration of the driver, or may determine whether the driver is dozing. The in-vehicle information detecting unit 7500 may subject an audio signal obtained by the collection of the sound to processing such as noise canceling processing or the like.

The integrated control unit 7600 controls general operation within the vehicle control system 7000 in accordance with various kinds of programs. The integrated control unit 7600 is connected with an input section 7800. The input section 7800 is implemented by a device capable of input operation by an occupant, such, for example, as a touch panel, a button, a microphone, a switch, a lever, or the like. The integrated control unit 7600 may be supplied with data obtained by voice recognition of voice input through the microphone. The input section 7800 may, for example, be a remote control device using infrared rays or other radio waves, or an external connecting device such as a mobile telephone, a personal digital assistant (PDA), or the like that supports operation of the vehicle control system 7000. The input section 7800 may be, for example, a camera. In that case, an occupant can input information by gesture. Alternatively, data may be input which is obtained by detecting the movement of a wearable device that an occupant wears. Further, the input section 7800 may, for example, include an input control circuit or the like that generates an input signal on the basis of information input by an occupant or the like using the above-described input section 7800, and which outputs the generated input signal to the integrated control unit 7600. An occupant or the like inputs various kinds of data or gives an instruction for processing operation to the vehicle control system 7000 by operating the input section 7800.

The storage section 7690 may include a read only memory (ROM) that stores various kinds of programs executed by the microcomputer and a random access memory (RAM) that stores various kinds of parameters, operation results, sensor values, or the like. In addition, the storage section 7690 may be implemented by a magnetic storage device such as a hard disc drive (HDD) or the like, a semiconductor storage device, an optical storage device, a magneto-optical storage device, or the like.

The general-purpose communication I/F 7620 is a communication I/F used widely, which communication I/F mediates communication with various apparatuses present in an external environment 7750. The general-purpose communication I/F 7620 may implement a cellular communication protocol such as global system for mobile communications (GSM (registered trademark)), worldwide interoperability for microwave access (WiMAX (registered trademark)), long term evolution (LTE (registered trademark)), LTE-advanced (LTE-A), or the like, or another wireless communication protocol such as wireless LAN (referred to also as wireless fidelity (Wi-Fi (registered trademark)), Bluetooth (registered trademark), or the like. The general-purpose communication I/F 7620 may, for example, connect to an apparatus (for example, an application server or a control server) present on an external network (for example, the Internet, a cloud network, or a company-specific network) via a base station or an access point. In addition, the general-purpose communication I/F 7620 may connect to a terminal present in the vicinity of the vehicle (which terminal is, for example, a terminal of the driver, a pedestrian, or a store, or a machine type communication (MTC) terminal) using a peer to peer (P2P) technology, for example.

The dedicated communication I/F 7630 is a communication I/F that supports a communication protocol developed for use in vehicles. The dedicated communication I/F 7630 may implement a standard protocol such as, for example, wireless access in vehicle environment (WAVE), which is a combination of institute of electrical and electronic engineers (IEEE) 802.11p as a lower layer and IEEE 38609 as a higher layer, dedicated short range communications (DSRC), or a cellular communication protocol. The dedicated communication I/F 7630 typically carries out V2X communication as a concept including one or more of communication between a vehicle and a vehicle (Vehicle to Vehicle), communication between a road and a vehicle (Vehicle to Infrastructure), communication between a vehicle and a home (Vehicle to Home), and communication between a pedestrian and a vehicle (Vehicle to Pedestrian).

The positioning section 7640, for example, performs positioning by receiving a global navigation satellite system (GNSS) signal from a GNSS satellite (for example, a GPS signal from a global positioning system (GPS) satellite), and generates positional information including the latitude, longitude, and altitude of the vehicle. Incidentally, the positioning section 7640 may identify a current position by exchanging signals with a wireless access point, or may obtain the positional information from a terminal such as a mobile telephone, a personal handyphone system (PHS), or a smart phone that has a positioning function.

The beacon receiving section 7650, for example, receives a radio wave or an electromagnetic wave transmitted from a radio station installed on a road or the like, and thereby obtains information about the current position, congestion, a closed road, a necessary time, or the like. Incidentally, the function of the beacon receiving section 7650 may be included in the dedicated communication I/F 7630 described above.

The in-vehicle device I/F 7660 is a communication interface that mediates connection between the microcomputer 7610 and various in-vehicle devices 7760 present within the vehicle. The in-vehicle device I/F 7660 may establish wireless connection using a wireless communication protocol such as wireless LAN, Bluetooth (registered trademark), near field communication (NFC), or wireless universal serial bus (WUSB). In addition, the in-vehicle device I/F 7660 may establish wired connection by universal serial bus (USB), high-definition multimedia interface (HDMI (registered trademark)), mobile high-definition link (MHL), or the like via a connection terminal (and a cable if necessary) not depicted in the figures. The in-vehicle devices 7760 may, for example, include at least one of a mobile device and a wearable device possessed by an occupant and an information device carried into or attached to the vehicle. The in-vehicle devices 7760 may also include a navigation device that searches for a path to an arbitrary destination. The in-vehicle device I/F 7660 exchanges control signals or data signals with these in-vehicle devices 7760.

The vehicle-mounted network I/F 7680 is an interface that mediates communication between the microcomputer 7610 and the communication network 7010. The vehicle-mounted network I/F 7680 transmits and receives signals or the like in conformity with a predetermined protocol supported by the communication network 7010.

The microcomputer 7610 of the integrated control unit 7600 controls the vehicle control system 7000 in accordance with various kinds of programs on the basis of information obtained via at least one of the general-purpose communication I/F 7620, the dedicated communication I/F 7630, the positioning section 7640, the beacon receiving section 7650, the in-vehicle device I/F 7660, and the vehicle-mounted network I/F 7680. For example, the microcomputer 7610 may calculate a control target value for the driving force generating device, the steering mechanism, or the braking device on the basis of the obtained information about the inside and outside of the vehicle, and output a control command to the driving system control unit 7100. For example, the microcomputer 7610 may perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like. In addition, the microcomputer 7610 may perform cooperative control intended for automated driving, which makes the vehicle to travel automatedly without depending on the operation of the driver, or the like, by controlling the driving force generating device, the steering mechanism, the braking device, or the like on the basis of the obtained information about the surroundings of the vehicle.

The microcomputer 7610 may generate three-dimensional distance information between the vehicle and an object such as a surrounding structure, a person, or the like, and generate local map information including information about the surroundings of the current position of the vehicle, on the basis of information obtained via at least one of the general-purpose communication I/F 7620, the dedicated communication I/F 7630, the positioning section 7640, the beacon receiving section 7650, the in-vehicle device I/F 7660, and the vehicle-mounted network I/F 7680. In addition, the microcomputer 7610 may predict danger such as collision of the vehicle, approaching of a pedestrian or the like, an entry to a closed road, or the like on the basis of the obtained information, and generate a warning signal. The warning signal may, for example, be a signal for producing a warning sound or lighting a warning lamp.

The sound/image output section 7670 transmits an output signal of at least one of a sound and an image to an output device capable of visually or auditorily notifying information to an occupant of the vehicle or the outside of the vehicle. In the example of Fig. 38, an audio speaker 7710, a display section 7720, and an instrument panel 7730 are illustrated as the output device. The display section 7720 may, for example, include at least one of an on-board display and a head-up display. The display section 7720 may have an augmented reality (AR) display function. The output device may be other than these devices, and may be another device such as headphones, a wearable device such as an eyeglass type display worn by an occupant or the like, a projector, a lamp, or the like. In a case where the output device is a display device, the display device visually displays results obtained by various kinds of processing performed by the microcomputer 7610 or information received from another control unit in various forms such as text, an image, a table, a graph, or the like. In addition, in a case where the output device is an audio output device, the audio output device converts an audio signal constituted of reproduced audio data or sound data or the like into an analog signal, and auditorily outputs the analog signal.

Note that, in the example illustrated in Fig. 38, at least two control units connected through the communication network 7010 may be integrated as one control unit. Alternatively, each individual control unit may include a plurality of control units. Further, the vehicle control system 7000 may include another control unit not depicted in the figures. In addition, part or the whole of the functions performed by one of the control units in the above description may be assigned to another control unit. That is, predetermined arithmetic processing may be performed by any of the control units as long as information is transmitted and received via the communication network 7010. Similarly, a sensor or a device connected to one of the control units may be connected to another control unit, and a plurality of control units may mutually transmit and receive detection information via the communication network 7010.

Note that a computer program for achieving at least one of the functions of the solid-state imaging device 1 according to the present embodiment described with reference to Figs. 1 and 2 can be mounted on any control unit or the like. Furthermore, a computer-readable storage medium in which such a computer program is stored can be provided. The storage medium is, for example, a magnetic disk, an optical disc, a magneto-optical disk, a flash memory, or the like. Furthermore, the computer program described above may be distributed over a network, for example, without using a storage medium.

In the vehicle control system 7000 described above, the solid-state imaging device 1 according to the present embodiment described with reference to Fig. 1 can be applied to the outside-vehicle information detecting unit 7400, the in-vehicle information detecting unit 7500, or another appropriate component of the application example illustrated in Fig. 38. For example, by applying the solid-state imaging device 1 in the present disclosure to the outside-vehicle information detecting unit 7400, it is possible to appropriately obtain information outside the automobile such as road conditions and conditions of other automobiles. Furthermore, by applying the solid-state imaging device 1 in the present disclosure to the in-vehicle information detecting unit 7500, it is possible to appropriately obtain information inside the automobile such as conditions of the driver or conditions of passengers.

Furthermore, at least a subset of the components of the solid-state imaging device 1 described with reference to Fig. 1 may be achieved in a module (for example, an integrated circuit module including one die) for the integrated control unit 7600 illustrated in Fig. 38. Alternatively, the solid-state imaging device 1 described with reference to Fig. 1 may be achieved by a plurality of control units of the vehicle control system 7000 illustrated in Fig. 38.

The embodiments described above may have the following modes.

(1) A solid-state imaging device including:
   a plurality of pixels; and
   a control circuit, in which
   each of the plurality of pixels includes:
      a photoelectric conversion element that performs photoelectric conversion on incident light to generate an electrical signal,
      a first pixel circuit that converts the electrical signal into first information, and
      a second pixel circuit that converts the electrical signal into second information, and
   the control circuit
      controls each of the plurality of pixels such that the photoelectric conversion element is connected to either the first pixel circuit or the second pixel circuit.
(2) The solid-state imaging device according to (1), in which
   the control circuit controls, on the basis of arrangement of each of the pixels, whether the first pixel circuit or the second pixel circuit is to convert the electrical signal.
(3) The solid-state imaging device according to (2), in which
   the control circuit controls, for each of the plurality of pixels, switching between timing of output using the first pixel circuit and timing of output using the second pixel circuit.
(4) The solid-state imaging device according to (3), further including:
   a pixel array in which the plurality of pixels is arranged, in which
   the plurality of pixels is arranged in a two-dimensional array along a line and a column extending in a direction intersecting a direction of the line in the pixel array.
(5) The solid-state imaging device according to (4), in which
   the control circuit performs, for each of regions in the pixel array, control for switching between the pixels that perform the output using the first pixel circuits and the pixels that perform the output using the second pixel circuits.
(6) The solid-state imaging device according to (5), in which
   the photoelectric conversion element is an element that obtains luminance information,
   the first pixel circuit converts the electrical signal into gradation information, and
   the second pixel circuit converts the electrical signal into event detection information.
(7) The solid-state imaging device according to (5), in which
   the photoelectric conversion element is a single photon avalanche diode (SPAD),
   the first pixel circuit converts the electrical signal into photon counting information, and
   the second pixel circuit converts the electrical signal into information for obtaining time of flight (ToF) information.
(8) The solid-state imaging device according to any one of (5) to (7), in which
   the control circuit switches, on the basis of time, between the first pixel circuits and the second pixel circuits.
(9) The solid-state imaging device according to (8), in which
   the control circuit switches between the first pixel circuits and the second pixel circuits at periodic timing.
(10) The solid-state imaging device according to (8) or (9), in which
   the control circuit performs control for spatially periodically arranging the pixels that use the first pixel circuits and the pixels that use the second pixel circuits in the pixel array.
(11) The solid-state imaging device according to (10), in which
   the control circuit performs control for outputting signals of a same type, namely the first signals or the second signals, from the pixels belonging to a same line.
(12) The solid-state imaging device according to (11), in which
   the control circuit performs control for outputting signals of a different type, namely the first signals or the second signals, from the pixels belonging to an adjacent line.
(13) The solid-state imaging device according to (11), in which
   the control circuit controls lines adjacent to the line that outputs the first signals such that one of the lines is a line that outputs the first signals and the other line is a line that outputs the second signals, and controls the line that outputs the second signals such that both adjacent lines are lines that output the first signals.
(14) The solid-state imaging device according to (11), in which
   the control circuit divides the pixel array into regions of 2 × 2 pixels, and performs control for arranging at least one pixel that outputs the first signal and pixels that output the second signals other than the at least one pixel that outputs the first signal for the pixels included in a range of every 2 × 2 pixels.
(15) The solid-state imaging device according to (14), in which
   the control circuit performs control such that the pixels that output the second signals periodically move in a four-phase period.
(16) The solid-state imaging device according to (11), in which
   the control circuit divides the pixel array into regions of 3 × 3 pixels, and performs control for arranging at least one pixel that outputs the first signal and pixels that output the second signals other than the at least one pixel that outputs the first signal for the pixels included in a range of every 3 × 3 pixels.
(17) The solid-state imaging device according to (16), in which
   the control circuit performs control such that the pixels that output the second signals periodically move in a nine-phase period.
(18) The solid-state imaging device according to (6), in which
   the control circuit
   obtains event information based on the second signals in the pixel array, and
   determines, on the basis of the event information, timing of selecting whether each of the plurality of pixels is to be connected to the first pixel circuit or the second pixel circuit.
(19) The solid-state imaging device according to (18), in which
   the control circuit
   obtains the event information in a region in the pixel array, and
   selects, on the basis of the event information belonging to the region, whether the pixels belonging to the region are to be connected to the first pixel circuits or the second pixel circuits.
(20) The solid-state imaging male value according to (18), in which
   the control circuit
   obtains an optical flow of a moving object present in the pixel array,
   sets a region in the pixel array on the basis of the optical flow, and
   selects whether the pixels belonging to the region are to be connected to the first pixel circuits or the second pixel circuits.
(21) The solid-state imaging device according to (6), in which
   the control circuit
   obtains luminance information based on the first signals in the pixel array, and
   determines, on the basis of the luminance information, timing of selecting whether each of the plurality of pixels is to be connected to the first pixel circuit or the second pixel circuit.
(22) The solid-state imaging device according to (21), in which
   the control circuit
   sets a region in the pixel array on the basis of intensity of the luminance information, and
   selects whether the pixels belonging to the region are to be connected to the first pixel circuits or the second pixel circuits.
(23) The solid-state imaging device according to (21), in which
   the control circuit
   sets a region in the pixel array on the basis of a result of object recognition using the luminance information, and
   selects whether the pixels belonging to the region are to be connected to the first pixel circuits or the second pixel circuits.

Aspects of the present disclosure are not limited to the above-described embodiments, and include various conceivable modifications. The effects of the present disclosure are not limited to the above-described contents. The components in each of the embodiments may be appropriately combined and applied. That is, various additions, modifications, and partial deletions can be made without departing from the conceptual idea and gist of the present disclosure derived from the contents defined in the claims and equivalents and the like thereof.

### REFERENCE SIGNS LIST

- 1: Solid-state imaging device
- 10: Solid-state imaging element
- 100: Pixel array
- 102: Control circuit
- 104: Line drive circuit
- 106: Column drive circuit
- 108: Signal processing circuit
- 110: Pixel
- 112: Photoelectric conversion element
- 114: Drive circuit
- 116: Switch
- 118: First pixel circuit
- 120: Second pixel circuit
- 16: Control unit
- 17: Storage unit
- 18: Interface
- 19: Optical system

## Claims

1. A solid-state imaging device comprising:
a plurality of pixels; and
a control circuit, wherein
each of the plurality of pixels includes:
a photoelectric conversion element that performs photoelectric conversion on incident light to generate an electrical signal;
a first pixel circuit that converts the electrical signal into first information; and
a second pixel circuit that converts the electrical signal into second information, and
the control circuit
controls each of the plurality of pixels such that the photoelectric conversion element is connected to either the first pixel circuit or the second pixel circuit.

2. The solid-state imaging device according to claim 1, wherein
the control circuit controls, on a basis of arrangement of each of the pixels, whether the first pixel circuit or the second pixel circuit is to convert the electrical signal.

3. The solid-state imaging device according to claim 2, wherein
the control circuit controls, for each of the plurality of pixels, switching between timing of output using the first pixel circuit and timing of output using the second pixel circuit.

4. The solid-state imaging device according to claim 3, further comprising:
a pixel array in which the plurality of pixels is arranged, wherein
the plurality of pixels is arranged in a two-dimensional array along a line and a column extending in a direction intersecting a direction of the line in the pixel array.

5. The solid-state imaging device according to claim 4, wherein
the control circuit performs, for each of regions in the pixel array, control for switching between the pixels that perform the output using the first pixel circuits and the pixels that perform the output using the second pixel circuits.

6. The solid-state imaging device according to claim 5, wherein
the photoelectric conversion element is an element that obtains luminance information,
the first pixel circuit converts the electrical signal into gradation information, and
the second pixel circuit converts the electrical signal into event detection information.

7. The solid-state imaging device according to claim 5, wherein
the photoelectric conversion element is a single photon avalanche diode (SPAD),
the first pixel circuit converts the electrical signal into photon counting information, and
the second pixel circuit converts the electrical signal into information for obtaining time of flight (ToF) information.

8. The solid-state imaging device according to claim 5, wherein
the control circuit switches, on a basis of time, between the first pixel circuits and the second pixel circuits.

9. The solid-state imaging device according to claim 8, wherein
the control circuit switches between the first pixel circuits and the second pixel circuits at periodic timing.

10. The solid-state imaging device according to claim 8, wherein
the control circuit performs control for spatially periodically arranging the pixels that use the first pixel circuits and the pixels that use the second pixel circuits in the pixel array.

11. The solid-state imaging device according to claim 10, wherein
the control circuit performs control for outputting signals of a same type, namely the first signals or the second signals, from the pixels belonging to a same line.

12. The solid-state imaging device according to claim 11, wherein
the control circuit performs control for outputting signals of a different type, namely the first signals or the second signals, from the pixels belonging to an adjacent line.

13. The solid-state imaging device according to claim 11, wherein
the control circuit divides the pixel array into regions of 2 × 2 pixels, and performs control for arranging at least one pixel that outputs the first signal and pixels that output the second signals other than the at least one pixel that outputs the first signal for the pixels included in a range of every 2 × 2 pixels.

14. The solid-state imaging device according to claim 11, wherein
the control circuit divides the pixel array into regions of 3 × 3 pixels, and performs control for arranging at least one pixel that outputs the first signal and pixels that output the second signals other than the at least one pixel that outputs the first signal for the pixels included in a range of every 3 × 3 pixels.

15. The solid-state imaging device according to claim 6, wherein
the control circuit
obtains event information based on the second signals in the pixel array, and
determines, on a basis of the event information, timing of selecting whether each of the plurality of pixels is to be connected to the first pixel circuit or the second pixel circuit.

16. The solid-state imaging device according to claim 15, wherein
the control circuit
obtains the event information in a region in the pixel array, and
selects, on a basis of the event information belonging to the region, whether the pixels belonging to the region are to be connected to the first pixel circuits or the second pixel circuits.

17. The solid-state imaging male value according to claim 15, wherein
the control circuit
obtains an optical flow of a moving object present in the pixel array,
sets a region in the pixel array on a basis of the optical flow, and
selects whether the pixels belonging to the region are to be connected to the first pixel circuits or the second pixel circuits.

18. The solid-state imaging device according to claim 6, wherein
the control circuit
obtains luminance information based on the first signals in the pixel array, and
determines, on a basis of the luminance information, timing of selecting whether each of the plurality of pixels is to be connected to the first pixel circuit or the second pixel circuit.

19. The solid-state imaging device according to claim 18, wherein
the control circuit
sets a region in the pixel array on a basis of intensity of the luminance information, and
selects whether the pixels belonging to the region are to be connected to the first pixel circuits or the second pixel circuits.

20. The solid-state imaging device according to claim 18, wherein
the control circuit
sets a region in the pixel array on a basis of a result of object recognition using the luminance information, and
selects whether the pixels belonging to the region are to be connected to the first pixel circuits or the second pixel circuits.
